# EUROPÄISCHE PATENTSCHRIFT

(11) **EP 3 402 852 B1**
(45) Veröffentlichungstag und Bekanntmachung des Hinweises auf die Patenterteilung: **18.12.2019**
(21) Anmeldenummer: 17700123.7
(22) Anmeldetag: 06.01.2017
(51) Int. Cl.: C09D 123/00

(54) **CARBOXYFUNKTIONELLE POLYETHER-BASIERTE REAKTIONSPRODUKTE UND WÄSSRIGE BASISLACKE ENTHALTEND DIE REAKTIONSPRODUKTE**
CARBOXYFUNCTIONAL POLYETHER BASED REACTION PRODUCTS AND AQUEOUS BASE PAINTS CONTAINING THE REACTION PRODUCTS
PRODUITS DE RÉACTION À BASE DE POLYÉTHER À FONCTION CARBOXY ET APPRÊT EN BASE AQUEUSE CONTENANT LES PRODUITS DE RÉACTION

(30) Priorität: 15.01.2016 EP 16151435
(43) Veröffentlichungstag der Anmeldung: 21.11.2018
(73) Patentinhaber: BASF Coatings GmbH, 48165 Münster (DE)
(72) Erfinder: STEINMETZ, Bernhard, 48165 Muenster (DE); HOFFMANN, Peter, 48165 Muenster (DE); REUTER, Hardy, 48165 Muenster (DE)
(74) Vertreter: BASF IP Association
(86) Internationale Anmeldenummer: PCT/EP2017/050235
(87) Internationale Veröffentlichungsnummer: WO 2017/121683

(56) Entgegenhaltungen:
- US-A- 3 362 922
- US-A- 3 542 711

## Beschreibung

Die vorliegende Erfindung betrifft neuartige wässrige Basislacke, welche mit Tetracarbonsäuredianhydriden hergestellte, carboxyfunktionelle Polyether-basierte Reaktionsprodukte enthalten. Sie betrifft ferner neuartige mit speziellen Tetracarbonsäuredianhydriden hergestellte, carboxyfunktionelle Reaktionsprodukte und die Verwendung der besagten Reaktionsprodukte in wässrigen Basislacken. Sie betrifft auch ein Verfahren zur Herstellung von Mehrschichtlackierungen unter Einsatz von wässrigen Basislacken sowie die mit Hilfe des besagten Verfahrens herstellbaren Mehrschichtlackierungen.

### Stand der Technik

Bekannt ist eine Vielzahl von Verfahren zur Herstellung von farb- und/oder effektgebenden mehrschichtigen Lackierungen (auch genannt Mehrschichtbeschichtungen oder Mehrschichtlackierungen). Aus dem Stand der Technik (vergleiche beispielsweise die deutsche Patentanmeldung DE 199 48 004 A1, Seite 17, Zeile 37, bis Seite 19, Zeile 22, oder das deutsche Patent DE 100 43 405 C1, Spalte 3, Absatz [0018], und Spalte 8, Absatz [0052], bis Spalte 9, Absatz [0057], in Verbindung mit Spalte 6, Absatz [0039], bis Spalte 8, Absatz [0050]) ist beispielsweise das folgende Verfahren bekannt, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird.

Dieses Verfahren wird beispielsweise in großem Umfang sowohl für die Erstlackierung (OEM) von Automobilen sowie der Lackierung von Metall- und Kunststoffanbauteilen eingesetzt. Die heutigen Anforderungen an die anwendungstechnologischen Eigenschaften solcher Lackierungen (Beschichtungen) sind enorm.

Ein immer wieder auftretendes und vom Stand der Technik nach wie vor nicht völlig zufriedenstellend gelöstes Problem ist die mechanische Beständigkeit der hergestellten Mehrschichtlackierungen, insbesondere gegen Steinschlageinflüsse.

Die Eigenschaften des in diesem Zusammenhang besonders wichtigen Basislacks und den daraus hergestellten Lackschichten werden insbesondere von den im Basislack enthaltenen Bindemitteln und Additiven, beispielsweise speziellen Reaktionsprodukten, bestimmt.

Hinzu kommt, dass heutzutage der Ersatz von Beschichtungsmitteln auf Basis organischer Lösemittel durch wässrige Beschichtungsmittel immer wichtiger wird, um den steigenden Anforderungen an die Umweltverträglichkeit Rechnung zu tragen.

Die EP 0 546 375 B1 offenbart wässrige Dispersionen enthaltend ein Polyurethan, welches unter anderem aufgebaut ist aus organischen Polyisocyanaten und Dihydroxylverbindungen mit mindestens zwei Carbonsäure- oder Carboxylatgruppen im Molekül, hergestellt durch Umsetzung von Dihydroxylverbindungen mit Tetracarbonsäuredianhydriden und die Verwendung dieser Dispersionen zur Herstellung von Überzügen und mit diesen Dispersionen beschichtete Gegenstände, wobei die hydrophil modifizierten Polyurethane eine reduzierte Wasserquellbarkeit aufweisen.

Die US 3 542 711 A sowie die US 3 362 922 A offenbaren jeweils ein Verfahren zur Herstellung von homogenen Pulvern zur Anwendung in Wirbelsinterbeschichtungen, wobei ein Polyepoxid mit einem Epoxid-Äquivalentgewicht größer 1,0, ein thermoplastisches Harz, ein Benzophenontetracarbonsäuredianhydrid und ein Zinnsalz einer Monocarbonsäure in einer Kugelmühle verpulvert werden.

### Aufgabe

Der vorliegenden Erfindung lag die Aufgabe zugrunde, ein Reaktionsprodukt beziehungsweise einen Basislack zur Verfügung zu stellen, mit dessen Hilfe sich Beschichtungen herstellen lassen, die die oben bezeichneten Nachteile des Standes der Technik nicht länger aufweisen. Insbesondere sollte durch die Bereitstellung eines neuen Reaktionsprodukts und dessen Einsatz in wässrigen Basislacken die Möglichkeit geschaffen werden, Beschichtungen bereitzustellen, die eine sehr gute Steinschlagbeständigkeit aufweisen und gleichzeitig durch den Einsatz von eben wässrigen Basislacken auf umweltschonende Weise hergestellt werden können.

### Lösung

Die genannten Aufgaben konnten durch einen pigmentierten wässrigen Basislack gelöst werden, welcher ein carboxyfunktionelles Polyether-basiertes Reaktionsprodukt enthält, welches herstellbar ist durch Umsetzung von
(a) mindestens einem cyclischen Tetracarbonsäuredianhydrid mit einem die beiden Anhydridgruppen verbrückenden aliphatischen, aromatischen oder araliphatischen Rest X,
   mit
(b) mindestens einem Polyether der allgemeinen Strukturformel (II) 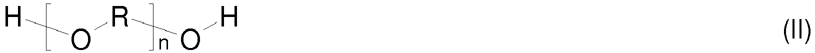 worin
   R ein C₃- bis C₆-Alkylenrest ist und n entsprechend so gewählt ist, dass der Polyether (b) ein zahlenmittleres Molekulargewicht von 500 bis 5000 g/mol besitzt,
   wobei die Komponenten (a) und (b) bei der Umsetzung in einem molaren Verhältnis von 0,7/2,3 bis 1,6/1,7 eingesetzt werden und das resultierende Reaktionsprodukt eine Säurezahl von 5 bis 80 mg KOH/g besitzt.

Die Bedingung, dass n so gewählt wird, dass der besagte Polyether ein zahlenmittleres Molekulargewicht von 500 bis 5000 g/mol besitzt, sei wie folgt veranschaulicht. Handelt es sich beispielsweise bei R um einen Tetramethylenrest und soll das zahlenmittlere Molekulargewicht 1000 g/mol betragen, so liegt n im Mittel zwischen 13 und 14. Anhand der gegebenen Vorgaben weiß der Fachmann problemlos, ein entsprechendes Reaktionsprodukt herzustellen beziehungsweise auszuwählen. Davon abgesehen geben die weiter unten folgenden Beschreibung und insbesondere die Beispiele nochmals zusätzliche Informationen. Der Parameter n ist also genauso wie das zahlenmittlere Molekulargewicht als ein statistischer Mittelwert zu verstehen.

Der neue Basislack wird in der Folge auch als erfindungsgemäßer Basislack bezeichnet. Bevorzugte Ausführungsformen des erfindungsgemäßen Basislacks gehen aus der folgenden Beschreibung sowie den Unteransprüchen hervor.

Ebenfalls Gegenstand der vorliegenden Erfindung ist ein Polyether-basiertes Reaktionsprodukt, welches herstellbar ist durch Umsetzung von
(a1) mindestens einem cyclischen Tetracarbonsäuredianhydrid der allgemeinen Strukturformel (I) 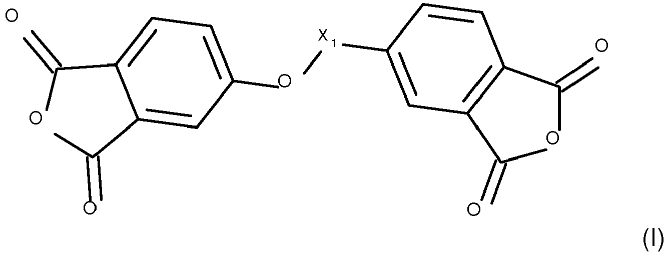 worin
   X₁ eine Bindung oder ein aliphatischer, aromatischer oder araliphatischer Rest ist, mit
(b) mindestens einem Polyether der allgemeinen Strukturformel (II) 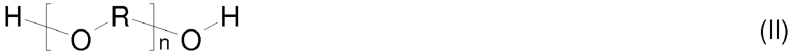 worin
   R ein C₃- bis C₆-Alkylenrest ist und n entsprechend so gewählt ist, dass der Polyether (b) ein zahlenmittleres Molekulargewicht von 500 bis 5000 g/mol besitzt,
   wobei die Komponenten (a1) und (b) bei der Umsetzung in einem molaren Verhältnis von 0,7/2,3 bis 1,6/1,7 eingesetzt werden und das resultierende Reaktionsprodukt eine Säurezahl von 5 bis 80 mg KOH/g besitzt.

Die Verwendung des Reaktionsprodukts in wässrigen Basislacken beziehungsweise die erfindungsgemäßen Wasserbasislacke zur Verbesserung der Steinschlagbeständigkeit ist ebenfalls Gegenstand dieser Erfindung. Nicht zuletzt betrifft die vorliegende Erfindung ein Verfahren zur Herstellung einer mehrschichtigen Lackierung auf einem Substrat sowie eine nach dem genannten Verfahren hergestellte Mehrschichtlackierung.

Durch den Einsatz der erfindungsgemäßen Reaktionsprodukte werden Basislacke erhalten, deren Verwendung bei der Herstellung von Beschichtungen, insbesondere Mehrschichtlackierungen, zu einer sehr guten Steinschlagbeständigkeit führt. Der erfindungsgemäße Basislack und der Einsatz des erfindungsgemäßen Reaktionsprodukts in einem Basislack können im Bereich der Erstlackierung, insbesondere dem Bereich der Automobilindustrie, als auch im Bereich der Automobilreparaturlackierung eingesetzt werden.

### Komponente (a)

Die Herstellung der erfindungsgemäß in dem wässrigen Basislack einzusetzenden Reaktionsprodukte kann unter Einsatz von cyclischen Tetracarbonsäuredianhydriden mit einem die beiden Anhydridgruppen verbrückenden aliphatischen, aromatischen oder araliphatischen Rest X erfolgen.

Cyclische Tetracarbonsäuredianhydride sind bekanntermaßen organische Moleküle, die zwei Carbonsäureanhydridgruppen enthalten, wobei die beiden Carbonsäureanhydridgruppen jeweils Teil einer cyclischen Gruppe des Moleküls sind. Das Molekül hat also mindestens zwei cyclische Gruppen, wobei es jedenfalls zwei cyclische Gruppen gibt, in denen jeweils eine Anhydridgruppe vorhanden ist. Diese Form der Anordnung der Anhydridgruppen bedeutet automatisch, dass die ringöffnende Reaktion einer Anhydridgruppe, beispielsweise mit einer Hydroxylgruppe, nicht zum Zerfall des Moleküls in zwei Moleküle führt, sondern auch nach der Ringöffnung nur ein Molekül vorhanden ist. Typische sowie gut verfügbare und bekannte organische Verbindungen mit entsprechenden Anhydridgruppen enthalten ebendiese Anhydridgruppen oft in Form eines aliphatischen Fünfrings (zur Definition von aliphatisch siehe unten). Cyclische Tetracarbonsäuredianhydride, in denen die beiden Anhydridgruppen in einem aliphatischen Fünfring vorhanden sind, sind damit konsequenterweise im Rahmen der vorliegenden Erfindung bevorzugt. Beispielhaft sei Pyromellitsäuredianhydrid angeführt, das Dianhydrid der Pyromellitsäure.

Der die Anhydridgruppen verbrückende Rest X kann aliphatischer, aromatischer oder araliphatischer (gemischt aromatisch-aliphatischer) Natur sein. Er verbrückt die beiden jeweils in einer cyclischen Gruppe vorhandenen Carbonsäureanhydridgruppen, ist also ein vierbindiger Rest. Bevorzugt enthält der Rest X 4 bis 40 Kohlenstoffatome, insbesondere 4 bis 27 Kohlenstoffatome.

Eine aliphatische Verbindung ist eine gesättigte oder ungesättigte, organische (also Kohlenstoff und Wasserstoff enthaltende) Verbindung, die nicht aromatisch beziehungsweise nicht araliphatisch ist. Eine aliphatische Verbindung kann beispielsweise ausschließlich aus Kohlenstoff und Wasserstoff bestehen (aliphatischer Kohlenwasserstoff) oder neben Kohlenstoff und Wasserstoff auch Heteroatome in Form von weiter unten benannten verbrückenden oder endständigen funktionellen Gruppen beziehungsweise Molekülanteilen enthalten. Ferner umfasst der Begriff aliphatische Verbindung also sowohl cyclische als auch acyclische aliphatische Verbindungen und gilt auch im Rahmen der vorliegenden Erfindung als entsprechender Oberbegriff.

Acyclische aliphatische Verbindungen können geradkettig (linear) oder verzweigt sein. Linear bedeutet in diesem Zusammenhang, dass die jeweilige Verbindung keine Verzweigungen hinsichtlich der Kohlenstoffkette aufweist, sondern die Kohlenstoffatome ausschließlich in linearer Abfolge in einer Kette angeordnet sind. Verzweigt beziehungsweise nicht-linear bedeutet damit im Rahmen der vorliegenden Erfindung, dass die jeweils betrachtete Verbindung eine Verzweigung in der Kohlenstoffkette aufweist, das heißt also anders als bei den linearen Verbindungen mindestens ein Kohlenstoffatom der jeweiligen Verbindung ein tertiäres oder quartäres Kohlenstoffatom ist. Als cyclische aliphatische Verbindungen beziehungsweise cyclisch-aliphatische Verbindungen werden solche Verbindungen bezeichnet, in denen zumindest ein Teil der vorhandenen Kohlenstoffatome im Molekül so verknüpft sind, dass einer oder mehrere Ringe ausgebildet werden. Natürlich können neben dem einen oder den mehreren Ringen weitere acyclische geradkettige oder verzweigte aliphatische Gruppen beziehungsweise Molekülanteile in einer cyclisch-aliphatischen Verbindung vorhanden sein.

Als funktionelle Gruppen beziehungsweise Molekülanteile sind im Rahmen der vorliegenden Erfindung solche Gruppen bezeichnet, die Heteroatome wie beispielsweise Sauerstoff und/oder Schwefel enthalten oder daraus bestehen. Dabei können die funktionellen Gruppen verbrückend sein, also zum Beispiel eine Ether-, Ester-, Keto- oder Sulfonylgruppe darstellen, oder endständig sein, wie dies beispielsweise Hydroxylgruppen oder Carboxylgruppen sind. Es können auch verbrückende und endständige funktionelle Gruppen zugleich in einer aliphatischen Verbindung enthalten sein.

Eine aliphatische Gruppe ist demzufolge eine Gruppe, die die oben für die aliphatischen Verbindungen genannten Voraussetzungen erfüllt, jedoch nur ein Teil eines Moleküls ist.

Die Unterscheidung von aliphatischen Verbindungen und aliphatischen Gruppen dient aus folgenden Gründen der besseren Übersichtlichkeit und klareren Definition:
Sofern als Rest X der oben genannten cyclischen Tetracarbonsäuredianhydride (a) ein aliphatischer Rest gewählt wird, handelt es sich nach oben aufgeführter Definition bei der Komponente (a) offensichtlich um eine aliphatische Verbindung. Möglich ist es aber ebenfalls, eine solche Komponente (a) als Verbindung zu betrachten, welche aus zwei, jeweils in einer Ringstruktur angeordneten Anhydridgruppen, sowie einem zwischen den Anhydridgruppen angeordneten aliphatischen Rest besteht. Die zweite Betrachtungsform hat den Vorteil, dass man die in jedem Fall zwingend vorhandenen Gruppen, hier die zwei jeweils in einer Ringstruktur angeordneten Anhydridgruppen, explizit nennen kann. Aus diesem Grund wurde auch diese Form der Betrachtung beziehungsweise Benennung bei der Definition der Komponenten (a) gewählt.

Eine aromatische Verbindung ist bekanntermaßen eine cyclische, planare organische Verbindung mit mindestens einem aromatischen System, das heißt es ist mindestens ein Ring-System mit einem durchkonjugierten π-System entsprechend den Aromatizitätskriterien nach Hückel enthalten. Beispielsweise kann es sich um eine reine Kohlenwasserstoffverbindung handeln (beispielsweise Benzol). Möglich ist auch, dass bestimmte Heteroatome in die Ringstruktur eingebaut sind (beispielsweise Pyridin). Neben dem einen oder den mehreren aromatischen Ring-Systemen können in einer aromatischen Verbindung weitere geradkettige und/oder verzweigte Kohlenwasserstoffgruppen sowie verbrückende und/oder endständige funktionelle Gruppen Teil der aromatischen Verbindung sein, solange diese einen Teil des durchkonjugierten π-Systems bilden. Beispielsweise handelt es sich bei zweien durch eine Ketogruppe oder eine Ethergruppe verknüpfte Phenylringe ebenfalls um aromatische Verbindungen.

Eine aromatische Gruppe ist demzufolge im Sinne der Erfindung eine Gruppe, die die oben für die aromatischen Verbindungen genannten Voraussetzungen erfüllt, jedoch nur ein Teil eines Moleküls ist. Beispielhaft sei auf eine aromatische Gruppe X einer Komponente (a) verwiesen.

Eine araliphatische Verbindung ist eine organische Verbindung, die aromatische und aliphatische Molekülanteile enthält. Solch eine gemischt aromatisch-aliphatische Verbindung muss demnach neben einer aromatischen Gruppe auch eine aliphatische Gruppe enthalten.

Eine araliphatische Gruppe ist demzufolge im Sinne der Erfindung eine Gruppe, die die oben für die araliphatischen Verbindungen genannten Voraussetzungen erfüllt, jedoch nur ein Teil eines Moleküls ist. Beispielhaft sei auf eine araliphatische Gruppe X einer Komponente (a) verwiesen.

Bevorzugt ist, dass der Rest X der Komponente (a) nicht mehr als fünf, nochmals bevorzugt nicht mehr als drei, insbesondere nicht mehr als zwei, verbrückende funktionelle Gruppen wie beispielsweise Ether-, Ester-, Keto- oder Sulfonylgruppen enthält.

Ebenfalls bevorzugt ist, dass der Rest X der Komponente (a) keine endständigen funktionellen Gruppen enthält, die zu einer Ringöffnung der cyclischen Carbonsäureanhydride führen können. Bevorzugt ist also, dass der Rest X der Komponente (a) keine endständigen funktionellen Gruppen ausgewählt aus der Gruppe bestehend aus Hydroxylgruppen, Carboxylgruppen, Aminogruppen, nochmals bevorzugt gar keine endständigen funktionellen Gruppen, enthält.

Ganz besonders bevorzugte Reste X der Komponente (a) enthalten nicht mehr als zwei verbrückende funktionelle Gruppen und keine endständigen funktionellen Gruppen.

Bevorzugt handelt es sich bei dem erfindungsgemäß einzusetzenden cyclischen Tetracarbonsäuredianhydrid um Pyromellitsäuredianhydrid, Cyclobutantetracarbonsäuredianhydrid, Benzophenontetracarbonsäuredianhydrid, Bicyclooctentetracarbonsäuredianhydrid oder Diphenylsulfontetracarbonsäuredianhydrid.

### Komponente (a1)

Die Herstellung des erfindungsgemäßen Reaktionsprodukts kann unter Einsatz von Tetracarbonsäuredianhydride der allgemeinen Strukturformel (I) 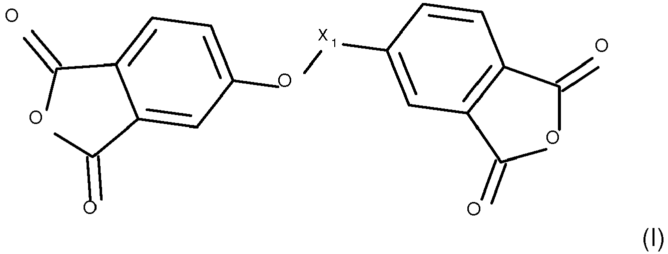 erfolgen, wobei es sich bei X₁ um eine Bindung oder um einen aliphatischen, aromatischen oder araliphatischen Rest handelt.

Unter der Angabe, dass der Rest X₁ eine Bindung darstellt, ist zu verstehen, dass dann der Sauerstoff der Ethergruppe beidseitig direkt an die beiden aromatischen Ringe angebunden ist.

Für den Fall, dass der Rest X₁ ein aliphatischer, aromatischer oder araliphatischer Rest ist, gilt das folgende:
Gemäß der obigen Ausführungen kann der aliphatische, aromatische oder araliphatische Rest X₁ ebenfalls weitere funktionelle Gruppen enthalten. Bevorzugt ist, dass der Rest X₁ der Komponente (a1) nicht mehr als drei, nochmals bevorzugt nicht mehr als zwei, insbesondere nicht mehr als eine, verbrückende funktionelle Gruppe wie beispielsweise eine Ether, Ester Keto- oder Sulfonylgruppe enthält.

Ebenfalls bevorzugt ist, dass der Rest X₁ der Komponente (a1) keine endständigen funktionellen Gruppen enthält, die zu einer Ringöffnung der cyclischen Carbonsäureanhydride führen können. Bevorzugt ist also, dass der Rest X₁ der Komponente (a1) keine endständigen funktionellen Gruppen ausgewählt aus der Gruppe bestehend aus Hydroxylgruppen, Carboxylgruppen, Aminogruppen, nochmals bevorzugt gar keine endständigen funktionellen Gruppen, enthält.

Ganz besonders bevorzugte Reste X₁ der Komponente (a) enthalten nicht mehr als eine verbrückende funktionelle Gruppe und keine endständigen funktionellen Gruppen. Nochmals weiter bevorzugt enthält der ganz besonders bevorzugte Rest X₁ der Komponente (a1) genau eine verbrückende Ethergruppe und keine endständigen funktionellen Gruppen.

Der aliphatische, aromatische oder araliphatische Rest X₁ enthält bevorzugt 1 bis 30 Kohlenstoffatome, besonders bevorzugt jedoch 1 bis 16 Kohlenstoffatome.

Ganz besonders bevorzugt handelt es sich bei dem erfindungsgemäß einzusetzenden Tetracarbonsäuredianhydrid der allgemeinen Strukturformel (I) um 4,4'-(4,4'-Isopropylidendiphenoxy)bis(phthalanhydrid) oder 4,4'-Oxydiphthalanhydrid.

### Komponente (b)

Die Herstellung der erfindungsgemäßen Reaktionsprodukte kann unter Einsatz mindestens eines Polyethers der allgemeinen Strukturformel (II) 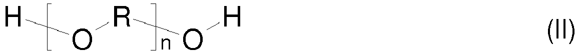 erfolgen, wobei es sich bei R um einen C₃ bis C₆-Alkylrest handelt. Der Index n ist jeweils so zu wählen, dass der besagte Polyether ein zahlenmittleres Molekulargewicht von 500 bis 5000 g/mol besitzt. Bevorzugt besitzt er ein zahlenmittleres Molekulargewicht von 650 bis 4000 g/mol, besonders bevorzugt von 1000 bis 3500 g/mol und ganz besonders bevorzugt 1500 bis 3200 g/mol. Beispielsweise kann das zahlenmittlere Molekulargewicht bei 1000 g/mol, 2000 g/mol oder 3000 g/mol liegen.

Das zahlenmittlere Molekulargewicht wird im Rahmen der vorliegenden Erfindung, sofern nicht spezifisch anders angegeben, mittels Dampfdruckosmose bestimmt. Gemessen wurde im Rahmen der vorliegenden Erfindung mittels eines Dampfdruckosmometers (Modell 10.00, Fa. Knauer) an Konzentrationsreihen der zu untersuchenden Komponente in Toluol bei 50°C mit Benzophenon als Eichsubstanz zur Bestimmung der experimentellen Eichkonstante des eingesetzten Messgeräts (nach E. Schröder, G. Müller, K.-F. Arndt, "Leitfaden der Polymercharakterisierung", Akademie-Verlag, Berlin, S. 47 - 54, 1982, wobei darin Benzil als Eichsubstanz eingesetzt wurde).

Bekanntermaßen und wie bereits weiter oben erläutert, handelt es sich bei dem zahlenmittleren Molekulargewicht immer um einen statistischen Mittelwert. Selbiges muss also auch für den Parameter n gemäß Formel (II) gelten. Die in diesem Zusammenhang zu erläuternde, für die Komponente (b) gewählte Bezeichnung Polyether versteht sich wie folgt. Bei Polymeren, beispielsweise Polyethern (b), handelt es sich immer um Mischungen von verschieden großen Molekülen. Zumindest ein Teil oder alle dieser Moleküle zeichnen sich durch eine Abfolge von gleichen oder verschiedenen Monomereinheiten (als reagierte Form von Monomeren) aus. Das Polymer beziehungsweise Molekülgemisch enthält also grundsätzlich Moleküle, die mehrere (das heißt mindestens zwei) gleiche oder verschiedene Monomereinheiten enthalten. Selbstverständlich können in dem Gemisch auch anteilig die Monomere selbst enthalten sein, das heißt also in ihrer nicht reagierten Form. Dies bedingt bekanntermaßen allein die in der Regel molekular nicht einheitlich ablaufende Herstellungsreaktion, das heißt Polymerisation von Monomeren. Während einem bestimmten Monomer ein diskretes Molekulargewicht zuzuordnen ist, ist ein Polymer also immer eine Mischung von Molekülen, die sich in ihrem Molekulargewicht unterscheiden. Ein Polymer kann daher nicht durch ein diskretes Molekulargewicht beschrieben werden, sondern ihm werden bekanntermaßen immer mittlere Molekulargewichte, beispielsweise das oben genannten zahlenmittlere Molekulargewicht, zugeordnet.

In dem erfindungsgemäß einzusetzenden Polyether können alle n Reste R gleich sein. Ebenso ist es aber auch möglich, dass unterschiedliche Arten von Resten R vorhanden sind. Bevorzugt sind alle Reste R gleich.
Bei R handelt es sich bevorzugt um einen C₄-Alkylenrest. Besonders bevorzugt handelt es sich um einen Tetramethylenrest.

Ganz besonders bevorzugt handelt es sich bei dem erfindungsgemäß einzusetzenden Polyether um ein im Mittel diolisches, lineares Polytetrahydrofuran.

### Das Reaktionsprodukt

Die Herstellung des einzusetzenden Reaktionsprodukts weist keine Besonderheiten auf. Die Komponenten (a) und (b) werden über allgemein bekannte Reaktionen von Hydroxylgruppen mit Anhydridgruppen miteinander verknüpft. Die Umsetzung kann beispielsweise in Masse oder in Lösung mit typischen organischen Lösemitteln bei Temperaturen von beispielsweise 100°C bis 300°C, bevorzugt bei Temperaturen von 100°C bis 180°C und insbesondere bevorzugt bei Temperaturen von 100°C bis 160°C erfolgen. Selbstverständlich können auch typische Katalysatoren wie Schwefelsäure, Sulfonsäuren und/oder Tetraalkyltitanate, Zink- beziehungsweise Zinnalkoxylate, Dialkylzinnoxide wie beispielsweise Di-n-butylzinnoxid oder organische Salze der Dialkylzinnoxide zum Einsatz kommen. Zu beachten ist selbstverständlich, dass ein carboxyfunktionelles Reaktionsprodukt zu entstehen hat. Da die Komponente (b) im Überschuss eingesetzt wird, ist darauf zu achten, dass die jeweils gewünschte Menge an Carboxylgruppen im entstehenden Produkt verbleibt. Bevorzugt ist, dass die nach Öffnung des Anhydrids verbleibende beziehungsweise entstehende Carboxylgruppe im Mittel erhalten bleibt und nicht weiter umgesetzt wird. Dies kann vom Fachmann problemlos dadurch erreicht werden, dass er den Abbruch der fortschreitenden Reaktion über eine Änderung der Temperatur erwirkt. Die Beobachtung der Säurezahl im Verlauf der Reaktion durch entsprechende Messungen erlaubt den kontrollierten Abbruch der Umsetzung nach Erreichen der gewünschten Säurezahl, beispielsweise durch Abkühlen auf eine Temperatur, bei der keine Reaktion mehr stattfinden kann.

Dabei werden die Komponenten (a) und (b) in einem molaren Verhältnis von 0,7/2,3 bis 1,6/1,7 bevorzugt von 0,8/2,2 bis 1,6/1,8 und ganz besonders bevorzugt von 0,9/2,1 bis 1,5/1,8 eingesetzt. Ein nochmals besonders bevorzugter Verhältnisbereich ist von 0,45/1 bis 0,55/1.

Das Reaktionsprodukt ist carboxyfunktionell. Die Säurezahl des Reaktionsprodukts liegt von 5 bis 80 mg KOH/g, bevorzugt 8 bis 60 mg KOH/g, insbesondere bevorzugt 10 bis 45 mg KOH/g und ganz besonders bevorzugt 12 bis 30 mg KOH/g. Die Säurezahl wird gemäß DIN 53402 bestimmt und bezieht sich selbstverständlich jeweils auf das Produkt an sich (und nicht auf die Säurezahl einer gegebenenfalls vorliegenden Lösung oder Dispersion des Produktes in einem Lösemittel). Wird im Rahmen der vorliegenden Erfindung auf eine offizielle Norm verwiesen, ist hiermit selbstverständlich die zum Anmeldetag geltende Fassung der Norm oder, falls zu diesem Zeitpunkt keine geltende Fassung besteht, die letzte geltende Fassung gemeint.

Das resultierende Reaktionsprodukt besitzt bevorzugt ein zahlenmittleres Molekulargewicht von 1500 bis 15000 g/mol, bevorzugt von 2000 bis 10000 g/mol und ganz besonderes bevorzugt von 2200 bis 6000 g/mol.

Das erfindungsgemäße oder erfindungsgemäß einzusetzende Reaktionsprodukt ist in der Regel hydroxyfunktionell, bevorzugt im Mittel dihydroxyfunktionell. Bevorzugt besitzt es also sowohl Hydroxyl- als auch Carboxyfunktionen.

Für ganz besonders bevorzugte Reaktionsprodukte gilt, dass sie herstellbar sind durch Umsetzung von (a) mindestens einem cyclischen Tetracarbonsäuredianhydrid mit einem die beiden Anhydridgruppen verbrückenden aliphatischen, aromatischen oder araliphatischen Rest X mit (b) einem diolischen, linearen Polytetrahydrofuran mit einem zahlenmittleren Molekulargewicht von 650 bis 4000 g/mol, die Komponenten (a) und (b) in einem molaren Verhältnis von 0,45/1 bis 0,55/1 eingesetzt werden und die Reaktionsprodukte eine Säurezahl von 8 bis 60 mg KOH/g sowie ein zahlenmittleres Molekulargewicht von 2000 bis 10000 g/mol aufweisen.

Bei Bedarf kann aus allen erfindungsgemäßen Reaktionsprodukten eine feinteilige, wässrige Dispersionen hergestellt werden durch schrittweise Zugabe von N,N-Dimethylethanolamin (Fa. BASF SE) und Wasser bei 30°C zum zuvor aufgeschmolzenen Polymer, um diese einer wässrigen Lackformulierung zuzusetzen.

### Der pigmentierte wässrige Basislack

Die vorliegende Erfindung betrifft ferner einen pigmentierten wässrigen Basislack, welcher mindestens ein erfindungsgemäßes Reaktionsprodukt enthält. Alle oben genannten bevorzugten Ausführungsformen hinsichtlich des Reaktionsprodukts gelten selbstverständlich auch in Bezug auf den Basislack enthaltend das Reaktionsprodukt.

Unter einem Basislack ist ein in der Automobillackierung und allgemeinen Industrielackierung eingesetzter farbgebender Zwischenbeschichtungsstoff zu verstehen. Dieser wird im Allgemeinen auf einem mit einem eingebrannten (vollständig gehärteten) Füller oder Grundierfüller vorbehandelten Metall- oder Kunststoffuntergrund, mitunter auch direkt auf dem Kunststoffuntergrund aufgebracht. Auch Altlackierungen, welche gegebenenfalls noch vorbehandelt werden müssen (beispielsweise durch Anschleifen), können als Untergründe dienen. Mittlerweile ist es durchaus üblich, mehr als eine Basislackschicht aufzutragen. Dementsprechend stellt in einem solchen Fall eine erste Basislackschicht den Untergrund für eine zweite dar. Möglich ist dabei insbesondere, anstatt einer Applikation auf eine Schicht eines eingebrannten Füllers den ersten Basislack direkt auf ein mit einer gehärteten Elektrotauschlackschicht versehendes Metallsubstrat zu applizieren und den zweiten Basislack direkt auf die erste Basislackschicht zu applizieren, ohne das letztere separat gehärtet wird. Um eine Basislackschicht beziehungsweise die oberste Basislackschicht insbesondere gegen Umwelteinflüsse zu schützen, wird auf dieser mindestens noch eine zusätzliche Klarlackschicht appliziert. Dies erfolgt in der Regel im nass-in-nass-Verfahren, das heißt der Klarlack wird appliziert, ohne dass die Basislackschicht(en) gehärtet wird (werden). Die Härtung erfolgt dann abschließend gemeinsam. Verbreitet ist inzwischen auch, nur eine Basislackschicht auf einer gehärteten Elektrotauschlackschicht herzustellen, dann einen Klarlack zu applizieren und diese beiden Schichten dann gemeinsam zu härten. Letzteres ist im Rahmen der vorliegenden Erfindung bevorzugt. Es hat sich nämlich gezeigt, dass bei Einsatz des erfindungsgemäßen Reaktionsprodukts trotz der Herstellung von nur einer Basislackschicht und einer damit gegebenen deutlichen Prozessvereinfachung eine ausgezeichnete Steinschlagbeständigkeit resultiert.

Die Summe über die gewichtsprozentualen Anteile, bezogen auf das Gesamtgewicht des pigmentierten wässrigen Basislacks, aller erfindungsgemäßen oder erfindungsgemäß einzusetzenden Reaktionsprodukte beträgt bevorzugt 0,1 bis 20 Gew.-%, besonders bevorzugt 0,5 bis 15 Gew.-% und ganz besonders bevorzugt 1,0 bis 10 Gew.-% oder sogar 1,5 bis 5 Gew.-%.

Liegt der Gehalt des erfindungsgemäßen Reaktionsprodukts unter 0,1 Gew.-% so ist es gegebenenfalls möglich, dass keine Verbesserung hinsichtlich Haftung und Steinschlagbeständigkeit mehr erzielt wird. Liegt der Gehalt bei mehr als 20 Gew.-%, so können unter Umständen Nachteile auftreten, wie zum Beispiel eine Inkompatibilität des besagten Reaktionsprodukts im Basislack. Eine solche Inkompatibilität kann sich beispielsweise durch ungleichmäßigen Verlauf sowie durch Ausschwimmen oder Absetzen zeigen.

Im Falle einer möglichen Spezifizierung auf Basislacke enthaltend bevorzugte Reaktionsprodukte in einem speziellen Anteilsbereich gilt folgendes. Die Reaktionsprodukte, die nicht in die bevorzugte Gruppe fallen, können selbstverständlich weiterhin im Basislack enthalten sein. Der spezielle Anteilsbereich gilt dann nur für die bevorzugte Gruppe von Reaktionsprodukten. Bevorzugt ist allerdings, dass für den Gesamtanteil von Reaktionsprodukten bestehend aus Reaktionsprodukten aus der bevorzugten Gruppe und Reaktionsprodukten, die nicht in die bevorzugte Gruppe fallen, ebenfalls der spezielle Anteilsbereich gilt.

Würde also eine Beschränkung auf einen Anteilsbereich von 0,5 bis 15 Gew.-% und eine bevorzugte Gruppe von Reaktionsprodukten durchgeführt werden, so gilt dieser Anteilsbereich augenscheinlich zunächst nur für die bevorzugte Gruppe an Reaktionsprodukten. Bevorzugt wäre dann aber, dass insgesamt von allen ursprünglich umfassten Reaktionsprodukten bestehend aus Reaktionsprodukten aus der bevorzugten Gruppe und Reaktionsprodukten, die nicht in die bevorzugte Gruppe fallen, ebenfalls von 0,5 bis 15 Gew.-% enthalten sind. Werden also 5 Gew.-% von Reaktionsprodukten der bevorzugten Gruppe eingesetzt, so können höchstens 10 Gew.-% der Reaktionsprodukte der nicht bevorzugten Gruppe eingesetzt werden.

Das genannte Prinzip gilt im Rahmen der vorliegenden Erfindung für alle genannten Komponenten des Basislacks und deren Anteilsbereiche, beispielsweise die Pigmente, die Polyurethanharze als Bindemittel oder auch die Vernetzungsmittel wie Melaminharze.

Die erfindungsgemäß eingesetzten Basislacke enthalten farb- und/oder effektgebende Pigmente. Solche Farbpigmente und Effektpigmente sind dem Fachmann bekannt und werden beispielsweise in Römpp-Lexikon Lacke und Druckfarben, Georg Thieme Verlag, Stuttgart, New York, 1998, Seite 176 und 451, beschrieben. Der Anteil der Pigmente kann beispielsweise im Bereich von 1 bis 40 Gew.-%, bevorzugt 2 bis 30 Gew.-%, besonders bevorzugt 3 bis 25 Gew.-%, bezogen auf das Gesamtgewicht des pigmentierten wässrigen Basislacks, liegen.

Im Rahmen der vorliegenden Erfindung sind Basislacke bevorzugt, die als Bindemittel physikalisch, thermisch oder thermisch und mit aktinischer Strahlung härtbare Polymere enthalten. Als Bindemittel wird im Rahmen der vorliegenden Erfindung gemäß einschlägiger DIN EN ISO 4618 der nichtflüchtige Anteil eines Beschichtungsmittels ohne Pigmente und Füllstoffe verstanden. Spezielle Bindemittel sind demnach beispielsweise auch lacktypische Additive, das erfindungsgemäße Reaktionsprodukt oder weiter unten beschriebene typische Vernetzungsmittel, auch wenn der Ausdruck im Folgenden hauptsächlich in Bezug auf bestimmte physikalisch, thermisch oder thermisch und mit aktinischer Strahlung härtbare Polymere, beispielsweise bestimmte Polyurethanharze, verwendet wird.

Neben dem erfindungsgemäßen Reaktionsprodukt enthalten die erfindungsgemäßen pigmentierten wässrigen Basislacke besonders bevorzugt mindestens ein weiteres, vom Reaktionsprodukt verschiedenes Polymer als Bindemittel, insbesondere mindestens ein Polymer ausgewählt aus der Gruppe bestehend aus Polyurethanen, Polyestern, Poly(meth)acrylaten und/oder Mischpolymerisaten der genannten Polymere, insbesondere bevorzugt jedenfalls, aber nicht zwingend ausschließlich, mindestens ein Polyurethan-Poly(meth)acrylat.

Im Rahmen der vorliegenden Erfindung bedeutet der Begriff "physikalische Härtung" die Bildung eines Films durch Abgabe von Lösemittel aus Polymerlösungen oder Polymerdispersionen. Üblicherweise sind hierfür keine Vernetzungsmittel notwendig.

Im Rahmen der vorliegenden Erfindung bedeutet der Begriff "thermische Härtung" die durch Wärme initiierte Vernetzung einer Lackschicht, bei der in dem zugrunde liegenden Lack entweder ein separat vorliegendes Vernetzungsmittel oder aber selbstvernetzende Bindemittel angewandt werden. Das Vernetzungsmittel enthält reaktive funktionelle Gruppen, die zu den in den Bindemitteln vorhandenen reaktiven funktionellen Gruppen komplementär sind. Üblicherweise wird dies von der Fachwelt als Fremdvernetzung bezeichnet. Sind die komplementären reaktiven funktionellen Gruppen oder autoreaktiven funktionellen Gruppen, das heißt Gruppen, die mit Gruppen derselben Art reagieren, bereits in den Bindemittelmolekülen vorhanden, liegen selbstvernetzende Bindemittel vor. Beispiele geeigneter komplementärer reaktiver funktioneller Gruppen und autoreaktiver funktioneller Gruppen sind aus der deutschen Patentanmeldung DE 199 30 665 A1, Seite 7, Zeile 28 bis Seite 9, Zeilen 24 bekannt.

Im Rahmen der vorliegenden Erfindung ist unter aktinischer Strahlung elektromagnetische Strahlung wie nahes Infrarot (NIR), UV-Strahlung, insbesondere UV-Strahlung, und Korpuskularstrahlung wie Elektronenstrahlung zu verstehen. Die Härtung durch UV-Strahlung wird üblicherweise durch radikalische oder kationische Photoinitiatoren initiiert. Werden die thermische Härtung und die Härtung mit aktinischem Licht gemeinsam angewandt, spricht man auch von "Dual Cure".

In der vorliegenden Erfindung sind sowohl Basislacke bevorzugt, die physikalisch, als auch solche die thermisch härtbar sind. Selbstverständlich findet bei Basislacken, die thermisch härtbar sind, immer auch anteilig eine physikalische Härtung statt. Diese Lacke werden aber schon aus Gründen der Übersichtlichkeit als thermisch härtbar bezeichnet.

Als thermisch härtende Basislacke sind solche bevorzugt, die als Bindemittel ein Polyurethanharz und/oder Polyurethan-Poly(meth)acrylat, bevorzugt ein hydroxygruppenhaltiges Polyurethanharz und/oder Polyurethan-Poly(meth)acrylat, und als Vernetzungsmittel ein Aminoplastharz oder ein blockiertes oder unblockiertes Polyisocyanat, bevorzugt ein Aminoplastharz, enthalten. Unter den Aminoplastharzen sind Melaminharze bevorzugt.

Die Summe über die gewichtsprozentualen Anteile, bezogen auf das Gesamtgewicht des pigmentierten wässrigen Basislacks, aller Vernetzungsmittel, bevorzugt Aminoplastharze und/oder blockierte und/oder unblockierte Polyisocyanate, insbesondere bevorzugt Melaminharze, beträgt bevorzugt 1 bis 20 Gew.-%, besonders bevorzugt 1,5 bis 17,5 Gew.-% und ganz besonders bevorzugt 2 bis 15 Gew.-% oder sogar 2,5 bis 10 Gew.-%.

Das bevorzugt enthaltene Polyurethanharz kann ionisch und/oder nicht ionisch hydrophil stabilisiert sein. In bevorzugten Ausführungsformen der vorliegenden Erfindung ist das Polyurethanharz ionisch hydrophil stabilisiert. Die bevorzugten Polyurethanharze sind linear oder enthalten Verzweigungen. Besonders bevorzugt handelt es sich um ein Polyurethanharz, in dessen Gegenwart olefinisch ungesättigte Monomere polymerisiert wurden. Das Polyurethanharz kann dabei neben dem aus der Polymerisation der olefinisch ungesättigten Monomere hervorgegangenen Polymer vorliegen ohne dass diese kovalent miteinander verbunden sind. Ebenso kann das Polyurethanharz aber auch mit dem aus der Polymerisation der olefinisch ungesättigten Monomere hervorgegangenen Polymer kovalent verbunden sein. Bei beiden Gruppen der vorgenannten Harze handelt es sich also um Mischpolymere, die im Falle des Einsatzes von (Meth)acrylatgruppenhaltigen Monomeren als olefinisch ungesättigte Monomere auch Polyurethan-Poly(meth)acrylate (siehe auch weiter oben) genannt werden können. Solche Polyurethan-Poly(meth)acrylate, insbesondere hydroxyfunktionelle Polyurethan-Poly(meth)acrylate, sind im Rahmen der vorliegenden Erfindung besonders bevorzugt einzusetzen. Bei den olefinisch ungesättigten Monomeren handelt es sich also bevorzugt um Acrylat- und/oder Methacrylatgruppenhaltige Monomere. Ebenfalls bevorzugt ist, dass die Acrylat- und/oder Methacrylatgruppenhaltigen Monomere in Kombination mit weiteren olefinisch ungesättigten Verbindungen eingesetzt werden, welche keine Acrylat- oder Methacrylatgruppen enthalten. Besonders bevorzugt werden als olefinisch ungesättigte Monomere Acrylat- oder Methacrylatgruppen-haltige Monomere an das Polyurethanharz kovalent gebunden. Diese Form von Polyurethan-Poly(meth)acrylaten ist nochmals bevorzugt.

Geeignete gesättigte oder ungesättigte Polyurethanharze beziehungsweise Polyurethan-Poly(meth)acrylate werden beispielsweise beschrieben in
- der deutschen Patentanmeldung DE 199 14 896 A1, Spalte 1, Zeilen 29 bis 49 und Spalte 4, Zeile 23 bis Spalte 11, Zeile 5,
- der deutschen Patentanmeldung DE 199 48 004 A1, Seite 4, Zeile 19 bis Seite 13, Zeile 48,
- der europäischen Patentanmeldung EP 0 228 003 A1, Seite 3, Zeile 24 bis Seite 5, Zeile 40,
- der europäischen Patentanmeldung EP 0 634 431 A1, Seite 3, Zeile 38 bis Seite 8, Zeile 9, oder
- der internationalen Patentanmeldung WO 92/15405, Seite 2, Zeile 35 bis Seite 10, Zeile 32, oder
- der deutschen Patentanmeldung DE 44 37 535 A1.

Für die Herstellung des Polyurethanharzes werden vorzugsweise die dem Fachmann bekannten aliphatischen, cycloaliphatischen, aliphatisch-cycloaliphatischen, aromatischen, aliphatisch-aromatischen und/oder cycloaliphatisch-aromatischen Polyisocyanate eingesetzt.

Als Alkohol-Komponente für die Herstellung der Polyurethanharze werden bevorzugt die dem Fachmann bekannten, gesättigten und ungesättigten höhermolekularen und niedermolekularen Polyole sowie gegebenenfalls auch Monoalkohole in untergeordneten Mengen eingesetzt. Als niedermolekulare Polyole werden insbesondere Diole und in untergeordneten Mengen Triole zur Einführung von Verzweigungen eingesetzt. Beispiele geeigneter höhermolekularer Polyole sind gesättigte oder olefinisch ungesättigte Polyesterpolyole und/oder Polyetherpolyole. Insbesondere werden als höhermolekulare Polyole Polyesterpolyole, insbesondere solche mit einem zahlenmittleren Molekulargewicht von 400 bis 5000 g/mol.

Zur hydrophilen Stabilisierung beziehungsweise zur Erhöhung der Dispergierbarkeit in wässrigem Medium kann das bevorzugt enthaltene Polyurethanharz bestimmte ionische Gruppen und/oder Gruppen, die in ionische Gruppen überführt werden können (potentiell ionische Gruppen), enthalten. Solche Polyurethanharze werden im Rahmen der vorliegenden Erfindung als ionisch hydrophil stabilisierte Polyurethanharze bezeichnet. Ebenfalls enthalten sein können nicht ionische hydrophil modifizierende Gruppen. Bevorzugt sind aber die ionisch hydrophil stabilisierten Polyurethane. Genauer handelt es sich bei den modifizierenden Gruppen entweder um
- funktionelle Gruppen, die durch Neutralisationsmittel und/oder Quaternisierungsmittel in Kationen überführt werden können, und/oder kationische Gruppen (kationische Modifizierung)
   oder
- funktionelle Gruppen, die durch Neutralisationsmittel in Anionen überführt werden können, und/oder anionische Gruppen (anionische Modifizierung)
   und/oder
- nicht ionische hydrophile Gruppen (nicht-ionische Modifizierung).

Wie der Fachmann weiß, handelt es sich bei den funktionellen Gruppen zur kationischen Modifizierung um beispielsweise primäre, sekundäre und/oder tertiäre Aminogruppen, sekundäre Sulfidgruppen und/oder tertiäre Phosphingruppen, insbesondere tertiäre Aminogruppen und sekundäre Sulfidgruppen (funktionelle Gruppen, die durch Neutralisationsmittel und/oder Quaternisierungsmittel in kationische Gruppen überführt werden können). Weiterhin zu nennen sind die aus den vorgenannten funktionellen Gruppen unter Einsatz von dem Fachmann bekannten Neutralisationsmitteln und/oder Quaternisierungsmitteln hergestellte kationische Gruppen wie primäre, sekundäre, tertiäre und/oder quaternäre Ammoniumgruppen, tertiäre Sulfoniumgruppen und/oder quaternäre Phosphoniumgruppen, insbesondere quaternäre Ammoniumgruppen und tertiäre Sulfoniumgruppen.

Bei den funktionellen Gruppen zur anionischen Modifizierung handelt es sich bekanntermaßen um beispielsweise Carbonsäure-, Sulfonsäure- und/oder Phosphonsäuregruppen, insbesondere Carbonsäuregruppen (funktionelle Gruppen, die durch Neutralisationsmittel in anionische Gruppen überführt werden können) sowie aus den vorgenannten funktionellen Gruppen unter Einsatz von dem Fachmann bekannten Neutralisationsmittel hergestellte anionische Gruppen wie Carboxylat-, Sulfonat- und/oder Phosphonatgruppen.

Bei den funktionellen Gruppen zur nicht-ionischen hydrophilen Modifizierung handelt es sich vorzugsweise um Poly(oxyalkylen)-Gruppen, insbesondere Poly(oxyethylen)-Gruppen.

Die ionisch hydrophilen Modifizierungen können durch Monomere, welche die (potentiell) ionischen Gruppen enthalten, in das Polyurethanharz eingeführt werden. Die nicht-ionischen Modifizierungen werden beispielsweise durch den Einbau von Poly(ethylen)oxid-Polymeren als laterale oder endständige Gruppen der Polyurethanmoleküle eingeführt. Die hydrophilen Modifizierungen werden beispielsweise über Verbindungen eingeführt, die mindestens eine gegenüber Isocyanatgruppen reaktive Gruppe, vorzugsweise mindestens eine Hydroxygruppe, enthalten. Zur Einführung der ionischen Modifizierung können Monomere eingesetzt werden, die neben den modifizierenden Gruppen mindestens eine Hydroxygruppe enthalten. Zur Einführung der nicht-ionischen Modifizierungen werden bevorzugt die dem Fachmann bekannten Polyetherdiole und/oder Alkoxypoly(oxyalkylen)alkohole eingesetzt.

Wie schon oben angedeutet, kann es sich bei dem Polyurethanharz vorzugsweise um ein mittels olefinisch ungesättigten Monomeren gepfropftes Pfropfpolymer handeln. In diesem Fall ist das Polyurethan also beispielsweise mit Seitengruppen und/oder Seitenketten gepfropft, die auf olefinisch ungesättigten Monomeren basieren. Insbesondere handelt es sich um Seitenketten, die auf Poly(meth)acrylaten basieren, wobei es sich dann um die schon oben beschriebenen Polyurethan-Poly(meth)acrylate handelt. Als Poly(meth)acrylate werden im Rahmen der vorliegenden Erfindung Polymere beziehungsweise polymere Reste bezeichnet, die Acrylat- und/oder Methacrylatgruppen-haltige Monomere umfassen, vorzugsweise aus Acrylat- und/oder Methacrylatgruppen-haltigen Monomeren bestehen. Unter Seitenketten, die auf Poly(meth)acrylaten basieren, sind Seitenketten zu verstehen, die bei der Pfropfpolymerisation unter Einsatz von (Meth)acrylatgruppen-haltigen Monomeren aufgebaut werden. Dabei werden bei der Pfropfpolymerisation vorzugsweise mehr als 50 mol-%, insbesondere mehr als 75 mol-%, insbesondere 100 mol.-%, bezogen auf die Gesamtmenge der bei der Pfropfpolymerisation eingesetzten Monomere, an (Meth)acrylatgruppen-haltigen Monomeren eingesetzt.

Die beschriebenen Seitenketten werden bevorzugt nach der Herstellung einer Polyurethanharz-Primärdispersion in das Polymer eingeführt (siehe auch Beschreibung weiter oben). In diesem Fall kann das in der Primärdispersion vorliegende Polyurethanharz seiten- und/oder endständige olefinisch ungesättigte Gruppen enthalten, über die dann die Pfropfpolymerisation mit den olefinisch ungesättigten Verbindungen verläuft. Das zu pfropfende Polyurethanharz kann also ein ungesättigtes Polyurethanharz sein. Bei der Pfropfpolymerisation handelt es sich dann um eine radikalische Polymerisation olefinisch ungesättigter Reaktionspartner. Möglich ist beispielsweise auch, dass die zur Pfropfpolymerisation eingesetzten olefinisch ungesättigten Verbindungen mindestens eine Hydroxygruppe enthalten. Dann kann auch zunächst eine Anbindung der olefinisch ungesättigten Verbindungen über diese Hydroxygruppen durch Reaktion mit freien Isocyanatgruppen des Polyurethanharzes erfolgen. Diese Anbindung findet anstelle oder neben der radikalischen Reaktion der olefinisch ungesättigten Verbindungen mit den gegebenenfalls vorhandenen seiten- und/oder endständigen olefinisch ungesättigten Gruppen des Polyurethanharzes statt. Danach folgt dann wieder die Pfropfpolymerisation über radikalische Polymerisation wie sie weiter oben beschrieben wurde. Erhalten werden jedenfalls mit olefinisch ungesättigten Verbindungen, vorzugsweise olefinisch ungesättigten Monomeren, gepfropfte Polyurethanharze.

Als olefinisch ungesättigte Verbindungen, mit denen das Polyurethanharz bevorzugt gepfropft wird, können praktisch alle radikalisch polymerisierbaren, olefinisch ungesättigten und organischen Monomere eingesetzt werden, die dem Fachmann für diese Zwecke zur Verfügung stehen. Beispielhaft seien einige bevorzugte Monomerklassen genannt:
- Hydroxyalkylester der (Meth)acrylsäure oder anderer alpha, beta -ethylenisch ungesättigter Carbonsäuren,
- (Meth)acrylsäurealkylester und/oder -cycloalkylester mit bis zu 20 Kohlenstoffatomen im Alkylrest,
- Ethylenisch ungesättigte Monomere, enthaltend mindestens eine Säuregruppe, insbesondere genau eine Carboxylgruppe, wie beispielsweise (Meth)acrylsäure,
- Vinylester von in alpha-Stellung verzweigten Monocarbonsäuren mit 5 bis 18 Kohlenstoffatomen,
- Umsetzungsprodukte aus (Meth)acrylsäure mit dem Glycidylester einer in alpha-Stellung verzweigten Monocarbonsäure mit 5 bis 18 Kohlenstoffatomen,
- Weitere ethylenisch ungesättigte Monomere wie Olefine (beispielsweise Ethylen), (Meth)acrylsäureamide, vinylaromatische Kohlenwasserstoffe (beispielsweise Styrol), Vinylverbindungen wie Vinylchlorid und/oder Vinylether wie Ethylvinylether.

Bevorzugt werden (Meth)acrylatgruppen-haltige Monomere eingesetzt, sodass das es sich bei den aufgepfropften Seitenketten um Poly(meth)acrylat-basierende Seitenketten handelt.

Die seiten- und/oder endständigen olefinisch ungesättigten Gruppen in dem Polyurethanharz, über die die Pfropfpolymerisation mit den olefinisch ungesättigten Verbindungen verlaufen kann, werden bevorzugt über bestimmte Monomere in das Polyurethanharz eingeführt. Diese bestimmten Monomere enthalten neben einer olefinisch ungesättigten Gruppe beispielsweise noch mindestens eine gegenüber Isocyanatgruppen reaktive Gruppe. Bevorzugt sind Hydroxylgruppen sowie primäre und sekundäre Aminogruppen. Insbesondere bevorzugt sind Hydroxylgruppen.

Natürlich können die beschriebenen Monomere, durch welche die seiten- und/oder endständigen olefinisch ungesättigten Gruppen in das Polyurethanharz eingeführt werden können, auch zum Einsatz kommen, ohne dass das Polyurethanharz danach noch zusätzlich mit olefinisch ungesättigten Verbindungen gepfropft wird. Bevorzugt ist allerdings, dass das Polyurethanharz mit olefinisch ungesättigten Verbindungen gepfropft ist.

Das bevorzugt enthaltene Polyurethanharz kann ein selbst- und/oder fremdvernetzendes Bindemittel sein. Bevorzugt umfasst das Polyurethanharz reaktive funktionelle Gruppen, durch die eine Fremdvernetzung möglich ist. In diesem Fall ist in dem pigmentierten wässrigen Basislack bevorzugt mindestens ein Vernetzungsmittel enthalten. Insbesondere handelt es sich bei den reaktiven funktionellen Gruppen, durch die eine Fremdvernetzung möglich ist, um Hydroxylgruppen. Besonders vorteilhaft sind im Rahmen des erfindungsgemäßen Verfahrens polyhydroxyfunktionelle Polyurethanharze einsetzbar. Dies bedeutet, dass das Polyurethanharz im Mittel mehr als eine Hydroxylgruppe pro Molekül enthält.

Die Herstellung des Polyurethanharzes erfolgt nach den üblichen Methoden der Polymerchemie. Gemeint sind dabei beispielsweise die Polymerisation von Polyisocyanaten und Polyolen zu Polyurethanen und die bevorzugt dann folgende Pfropfpolymerisation mit olefinisch ungesättigten Verbindungen. Diese Methoden sind dem Fachmann bekannt und können individuell angepasst werden. Beispielhafte Herstellungsverfahren und Reaktionsbedingungen sind der europäischen Patentschrift EP 0521 928 B1, Seite 2, Zeile 57 bis Seite 8, Zeile 16 zu entnehmen.

Das bevorzugt enthaltene Polyurethanharz besitzt beispielsweise eine Hydroxylzahl von 0 bis 250 mg KOH/g, insbesondere aber von 20 bis 150 mg KOH/g. Die Säurezahl des Polyurethanharzes liegt bevorzugt bei 5 bis 200 mg KOH/g, insbesondere bei 10 bis 40 mg KOH/g. Die Hydroxylzahl wird im Rahmen der vorliegenden Erfindung nach DIN 53240 bestimmt.

Der Polyurethanharzgehalt liegt bevorzugt zwischen 5 und 80 Gew.-%, besonders bevorzugt zwischen 8 und 70 Gew.-% und besonders bevorzugt zwischen 10 und 60 Gew.-%, jeweils bezogen auf den filmbildenden Festkörper des Basislacks.

Unabhängig davon, dass im Rahmen der vorliegenden Erfindung stellenweise sowohl Polyurethane (auch genannt Polyurethanharze), als auch Polyurethan-Poly(meth)acrylate genannt werden, gilt, dass der Ausdruck Polyurethane als Oberbegriff die Polyurethan-Poly(meth)acrylate umfasst. Wird an einer bestimmten Textstelle also nicht zwischen beiden Polymerklassen unterschieden, sondern ist lediglich der Ausdruck Polyurethan oder Polyurethanharz genannt, gelten beide Polymerklassen als umfasst.

Unter filmbildendem Festkörper, welcher letztlich dem Bindemittelanteil entspricht, ist der nichtflüchtige Gewichtsanteil des Basislacks ohne Pigmente und gegebenenfalls Füllstoffe zu verstehen. Der filmbildende Festkörper ist folgendermaßen bestimmbar: Eine Probe des pigmentierten wässrigen Basislacks (etwa 1 g) wird mit der 50 bis 100-fachen Menge Tetrahydrofuran versetzt und dann etwa 10 Minuten gerührt. Anschließend werden die unlöslichen Pigmente und gegebenenfalls Füllstoffe abfiltriert, der Rückstand mit wenig THF nachgespült und von dem so erhaltenen Filtrat das THF am Rotationsverdampfer entfernt. Der Rückstand des Filtrats wird zwei Stunden bei 120°C getrocknet und der dabei resultierende filmbildende Festkörper ausgewogen.

Die Summe über die gewichtsprozentualen Anteile, bezogen auf das Gesamtgewicht des pigmentierten wässrigen Basislacks, aller Polyurethanharze beträgt bevorzugt 2 bis 40 Gew.-%, besonders bevorzugt 2,5 bis 30 Gew.-% und ganz besonders bevorzugt 3 bis 20 Gew.-%.

Bevorzugt ist zudem ein Verdicker enthalten. Als Verdicker eignen sich anorganische Verdicker aus der Gruppe der Schichtsilikate. Neben den anorganischen Verdickern können jedoch auch ein oder mehrere organische Verdicker eingesetzt werden. Diese werden vorzugsweise gewählt aus der Gruppe bestehend aus (Meth)acrylsäure-(Meth)acrylat-Copolymerisat-Verdickern, wie beispielsweise dem Handelsprodukt Rheovis AS S130 (BASF) und Polyurethanverdickern, wie beispielsweise dem Handelsprodukt Rheovis PU 1250 (BASF). Die eingesetzten Verdicker sind von den eingesetzten Bindemitteln verschieden.

Darüber hinaus kann der pigmentierte wässrige Basislack noch mindestens einen Zusatzstoff enthalten. Beispiele für derartige Zusatzstoffe sind rückstandsfrei oder im Wesentlichen rückstandsfrei thermisch zersetzbare Salze, von den oben beschriebenen Polymeren verschiedene physikalisch, thermisch und/oder mit aktinischer Strahlung härtbare Harze als Bindemittel, weitere Vernetzungsmittel, organische Lösemittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel. Enthalten sein können auch Verdicker wie anorganische Verdicker aus der Gruppe der Schichtsilikate oder organische Verdicker wie (Meth)acrylsäure-(Meth)acrylat-Copolymerisat-Verdicker oder auch Polyurethanverdicker, welche von den eingesetzten Bindemitteln verschieden sind.

Geeignete Zusatzstoffe der vorstehend genannten Art sind beispielsweise aus
- der deutschen Patentanmeldung DE 199 48 004 A1, Seite 14, Zeile 4, bis Seite 17, Zeile 5,
- dem deutschen Patent DE 100 43 405 C1, Spalte 5, Absätze [0031] bis [0033],
bekannt. Sie werden in den üblichen und bekannten Mengen eingesetzt.

Der Festkörpergehalt der erfindungsgemäßen Basislacke kann je nach den Erfordernissen des Einzelfalls variieren. In erster Linie richtet sich der Festkörpergehalt nach der für die Applikation, insbesondere Spritzapplikation, erforderlichen Viskosität, so dass er vom Fachmann aufgrund seines allgemeinen Fachwissens gegebenenfalls unter Zuhilfenahme weniger orientierender Versuche eingestellt werden kann.

Vorzugsweise liegt der Festkörpergehalt der Basislacke bei 5 bis 70 Gew.-%, besonders bevorzugt bei 8 bis 60 Gew.-% und ganz besonders bevorzugt bei 12 bis 55 Gew.-%.

Unter Festkörpergehalt (nicht-flüchtiger Anteil) ist derjenige Gewichtsanteil zu verstehen, der unter festgelegten Bedingungen beim Eindampfen als Rückstand verbleibt. In der vorliegenden Anmeldung wird der Festkörper, sofern nicht explizit anders angegeben, nach DIN EN ISO 3251 bestimmt. Dazu wird der Basislack für 60 Minuten bei 130°C eingedampft.

Diese Prüfmethode wird, sofern nicht anders angegeben, ebenfalls angewandt, um beispielsweise den Anteil verschiedener Komponenten des Basislacks am Gesamtgewicht des Basislacks zu bestimmen. So kann beispielsweise der Festkörper einer Dispersion eines Polyurethanharzes, welches dem Basislack zugegeben werden soll, entsprechend bestimmt werden, um den Anteil dieses Polyurethanharzes an der Gesamtkomposition zu ermitteln.

Der erfindungsgemäße Basislack ist wässrig. Der Ausdruck "wässrig" ist dem Fachmann in diesem Zusammenhang bekannt. Gemeint ist grundsätzlich ein Basislack, der nicht ausschließlich auf organischen Lösemitteln basiert, das heißt nicht ausschließlich als Lösemittel solche auf organischer Basis enthält, sondern der im Gegenteil als Lösemittel einen signifikanten Anteil Wasser enthält. Bevorzugt ist "wässrig" im Rahmen der vorliegenden Erfindung so zu verstehen, dass das jeweilige Beschichtungsmittel, insbesondere der Basislack, einen Anteil von mindestens 40 Gew.-%, bevorzugt mindestens 50 Gew.-%, ganz besonders bevorzugt mindestens 60 Gew.-% Wasser, jeweils bezogen auf die Gesamtmenge der enthaltenen Lösemittel (das heißt Wasser und organische Lösemittel), aufweist. Darunter bevorzugt beträgt der Anteil an Wasser 40 bis 90 Gew.-%, insbesondere 50 bis 80 Gew.-%, ganz besonders bevorzugt 60 bis 75 Gew.-%, jeweils bezogen auf die Gesamtmenge der enthaltenen Lösemittel.

Die Herstellung der erfindungsgemäß eingesetzten Basislacke kann unter Einsatz der für die Herstellung von Basislacken üblichen und bekannten Mischverfahren und Mischaggregaten erfolgen.

### Das erfindungsgemäße Verfahren und die erfindungsgemäße Mehrschichtlackierung

Ein weiterer Aspekt der vorliegenden Erfindung ist ein Verfahren zur Herstellung einer mehrschichtigen Lackierung, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,
welches dadurch gekennzeichnet ist, dass in Stufe (1) ein erfindungsgemäßer Basislack oder ein Basislack eingesetzt wird, welcher mindestens ein erfindungsgemäßes Reaktionsprodukt enthält. Alle vorstehend genannten Ausführungen hinsichtlich des erfindungsgemäßen Reaktionsprodukts und des erfindungsgemäßen pigmentierten wässrigen Basislacks gelten auch für das erfindungsgemäße Verfahren. Dies gilt insbesondere auch für alle bevorzugten, besonders bevorzugten und ganz besonders bevorzugten Merkmale.

Das besagte Verfahren wird bevorzugt zur Herstellung von farbgebenden Mehrschichtlackierungen, effektgebenden Lackierungen und farb- und effektgebenden Lackierungen eingesetzt.

Die Applikation des erfindungsgemäß eingesetzten pigmentierten wässrigen Basislacks erfolgt üblicherweise auf mit Füller oder Grundierfüller vorbehandelte Metall- oder Kunststoffsubstrate. Gegebenenfalls kann der besagte Basislack auch direkt auf dem Kunststoffuntergrund aufgebracht werden.

Soll ein Metallsubstrat beschichtet werden, so wird dieses vor der Applikation des Füllers oder Grundierfüllers bevorzugt noch mit einer Elektrotauchlackierung beschichtet.

Wird ein Kunststoffsubstrat beschichtet, so wird dieses vor der Applikation des Füllers oder Grundierfüllers bevorzugt noch vorbehandelt. Die hierzu am häufigsten angewendeten Verfahren sind das Beflammen, die Plasmabehandlung und die Corona-Entladung. Bevorzugt wird das Beflammen eingesetzt.

Die Applikation des erfindungsgemäßen pigmentierten wässrigen Basislacks auf wie oben beschriebene mit gehärteten Elektrotauchlackierungen und/oder Füllern vorbeschichtete Metallsubstrate kann in den im Rahmen der Automobilindustrie üblichen Schichtdicken im Bereich von beispielsweise 5 bis 100 Mikrometer, bevorzugt 5 bis 60 Mikrometer erfolgen. Dabei werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heissspritzapplikation wie zum Beispiel Hot-Air-Heissspritzen.

Nach der Applikation des pigmentierten wässrigen Basislacks kann dieser nach bekannten Methoden getrocknet werden. Beispielsweise können (1-Komponenten)-Basislacke, welche bevorzugt sind, bei Raumtemperatur für 1 bis 60 Minuten abgelüftet werden und darauf folgend bevorzugt bei gegebenenfalls leicht erhöhten Temperaturen von 30 bis 90°C getrocknet werden. Unter Ablüften und Trocknung ist im Rahmen der vorliegenden Erfindung ein Abdunsten von organischen Lösemitteln und/oder Wasser zu verstehen, wodurch der Lack trockener, aber noch nicht gehärtet wird beziehungsweise noch kein vollständig vernetzter Lackfilm gebildet wird.

Dann wird ein handelsüblicher Klarlack nach ebenfalls gängigen Methoden appliziert, wobei die Schichtdicken wiederum in den gängigen Bereichen, beispielsweise 5 bis 100 Mikrometer, liegen.

Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet. Dabei finden beispielsweise Vernetzungsreaktionen statt, wodurch eine erfindungsgemäße farb- und/oder effektgebende mehrschichtige Lackierung auf einem Substrat hergestellt wird. Die Härtung erfolgt bevorzugt thermisch bei Temperaturen von 60 bis 200°C. Als thermisch härtende Basislacke sind solche bevorzugt, die als zusätzliches Bindemittel ein Polyurethanharz und als Vernetzungsmittel ein Aminoplastharz oder ein blockiertes oder unblockiertes Polyisocyanat, bevorzugt ein Aminoplastharz, enthalten. Unter den Aminoplastharzen sind Melaminharze bevorzugt.

In einer besonderen Ausführungsform umfasst das Verfahren zur Herstellung einer mehrschichtigen Lackierung die folgenden Schritte:
Herstellung einer gehärteten Elektrotauchlackschicht auf dem metallischen Substrat durch elektrophoretisches Aufbringen eines Elektrotauchlacks auf das Substrat und anschließende Härtung des Elektrotauchlacks,
Herstellung (i) einer Basislackschicht oder (ii) mehrerer direkt aufeinander folgender Basislackschichten direkt auf der gehärteten Elektrotauchlackschicht durch (i) Aufbringen eines wässrigen Basislacks direkt auf die Elektrotauchlackschicht oder (ii) direkt aufeinanderfolgendes Aufbringen von mehreren Basislacken auf die Elektrotauchlackschicht,
Herstellung einer Klarlackschicht direkt auf (i) der Basislackschicht oder (ii) der obersten Basislackschicht durch Aufbringen eines Klarlacks direkt auf (i) die eine Basislackschicht oder (ii) die oberste Basislackschicht,
wobei (i) der eine Basislack oder (ii) mindestens einer der Basislacke ein erfindungsgemäßer Basislack ist,
gemeinsame Härtung der Basislackschicht (i) oder der Basislackschichten (ii) sowie der Klarlackschicht.

In der letztgenannten Ausführungsform wird also im Vergleich zu den oben beschriebenen Standardverfahren auf die Applikation und separate Härtung eines gängigen Füllers verzichtet. Stattdessen werden alle auf die Elektrotauchlackschicht applizierten Schichten gemeinsam gehärtet, wodurch der Gesamtprozess deutlich ökonomischer gestaltet wird. Trotzdem gelingt auf diese Weise und insbesondere durch den Einsatz eines erfindungsgemäßen Basislacks enthaltend ein erfindungsgemäßes Reaktionsprodukt der Aufbau von Mehrschichtlackierungen, die hervorragende mechanische Stabilität und Haftung aufweisen und damit technologisch besonders herausragend sind.

Das Aufbringen eines Beschichtungsmittels direkt auf ein Substrat beziehungsweise direkt auf eine zuvor hergestellte Beschichtungsschicht versteht sich wie folgt. Das jeweilige Beschichtungsmittel wird so aufgebracht, dass die daraus hergestellte Beschichtungsschicht auf dem Substrat (der anderen Beschichtungsschicht) angeordnet ist und in direktem Kontakt mit dem Substrat (der anderen Beschichtungsschicht) steht. Zwischen Beschichtungsschicht und Substrat (anderer Beschichtungsschicht) ist also insbesondere keine andere Schicht angeordnet. Ohne die Angabe direkt ist die aufgebrachte Beschichtungsschicht zwar auf dem Substrat (der anderen Schicht) angeordnet, es muss aber nicht zwingend ein direkter Kontakt vorhanden sein. Insbesondere können weitere Schichten dazwischen angeordnet sein. Im Rahmen der vorliegenden Erfindung gilt also folgendes. Ist keine Spezifizierung von direkt angegeben, so ist augenscheinlich keine Beschränkung auf direkt gegeben.

Die Beschichtung von Kunststoffsubstraten erfolgt im Grunde genommen analog zu der von Metallsubstraten. Allerdings wird hier im Allgemeinen bei deutlich niedrigeren Temperaturen von 30 bis 90 °C gehärtet. Bevorzugt ist daher der Einsatz von Zweikomponentenklarlacken. Ferner werden in diesem Zusammenhang bevorzugt Basislacke eingesetzt, welche als Bindemittel ein Polyurethanharz aber keinen Vernetzer enthalten.

Mit Hilfe des erfindungsgemäßen Verfahrens können metallische und nichtmetallische Substrate, insbesondere Kunststoffsubstrate, vorzugsweise Automobilkarosserien oder Teile davon lackiert werden.

Das erfindungsgemäße Verfahren kann ferner zur Doppellackierung in der OEM-Lackierung eingesetzt werden. Darunter ist zu verstehen, dass ein Substrat, welches mit Hilfe des erfindungsgemäßen Verfahrens beschichtet wurde, ein zweites Mal, ebenfalls mit Hilfe des erfindungsgemäßen Verfahrens, lackiert wird.

Die Erfindung betrifft ferner Mehrschichtlackierungen, welche nach dem oben beschriebenen Verfahren herstellbar sind. Diese Mehrschichtlackierungen sollen im Folgenden als erfindungsgemäße Mehrschichtlackierungen bezeichnet werden.

Alle vorstehend genannten Ausführungen hinsichtlich des erfindungsgemäßen Reaktionsprodukts und des pigmentierten wässrigen Basislacks gelten entsprechend auch für die besagte Mehrschichtlackierung sowie für das erfindungsgemäße Verfahren. Dies gilt insbesondere auch für alle bevorzugten, besonders bevorzugten und ganz besonders bevorzugten Merkmale.

Bevorzugt handelt es sich bei den erfindungsgemäßen Mehrschichtlackierungen um farbgebende Mehrschichtlackierungen, effektgebenden Lackierungen und farb- und effektgebenden Lackierungen.

Ein weiterer Aspekt der Erfindung betrifft das erfindungsgemäße Verfahren, wobei es sich bei dem besagten Substrat aus Stufe (1) um eine Mehrschichtlackierung handelt, welche Fehlstellen besitzt. Bei dieser Substrat-Mehrschichtlackierung, welche Fehlstellen besitzt, handelt es sich also um eine Originallackierung, welche ausgebessert oder komplett überlackiert werden soll.

Das erfindungsgemäße Verfahren eignet sich demnach zur Ausbesserung von Fehlstellen auf Mehrschichtlackierungen (Reparatur). Als Fehlstellen beziehungsweise Filmfehler werden im Allgemeinen Störungen an und in der Beschichtung, die meist nach ihrer Form oder ihrem Aussehen benannt werden, bezeichnet. Dem Fachmann ist eine Vielzahl von möglichen Arten von solchen Filmfehlern bekannt. Diese werden beispielsweise in Römpp-Lexikon Lacke und Druckfarben, Georg Thieme Verlag, Stuttgart, New York, 1998, Seite 235, "Filmfehler" beschrieben.

Die mit Hilfe des erfindungsgemäßen Verfahrens hergestellten Mehrschichtlackierungen können ebenfalls solche Fehlstellen aufweisen. In einer bevorzugten Ausführungsform des erfindungsgemäßen Verfahrens handelt es sich bei dem Substrat aus Stufe (1) daher um eine erfindungsgemäße Mehrschichtlackierung, welche Fehlstellen aufweist.

Diese Mehrschichtlackierungen werden bevorzugt auf Automobilkarossen oder Teilen davon mit Hilfe des oben bezeichneten erfindungsgemäßen Verfahrens im Rahmen der Automobilserienlackierung hergestellt. Treten solche Fehlstellen direkt nach erfolgter OEM-Lackierung auf, so werden diese direkt ausgebessert. Man spricht daher auch von OEM-Automobilreparaturlackierung. Sind nur kleine Fehlstellen auszubessern, so wird nicht die ganze Karosse komplett überlackiert (Doppellackierung), sondern nur der sogenannte "Spot" repariert. Letzterer Prozess wird "Spot Repair" genannt. Besonders bevorzugt ist daher der Einsatz des erfindungsgemäßen Verfahrens zum Ausbessern von Fehlstellen auf erfindungsgemäßen Mehrschichtlackierungen (Originallackierungen) in der OEM-Automobilreparaturlackierung.

Sofern im Rahmen der vorliegenden Erfindung der Bereich der Automobilreparaturlackierung angesprochen ist, das heißt also von der Ausbesserung von Fehlstellen die Rede ist, und dabei als Substrat eine Mehrschichtlackierung, welche Fehlstellen besitzt, genannt wird, ist hiermit selbstverständlich gemeint, dass diese Substrat-Mehrschichtlackierung mit Fehlstellen (Originallackierung) in der Regel auf einem wie oben beschriebenen Metallsubstrat oder einem Kunststoffsubstrat angeordnet ist.

Damit die ausgebesserte Stelle sich farblich nicht vom Rest der Originallackierung unterscheidet, ist es bevorzugt, dass der in Stufe (1) des erfindungsgemäßen Verfahrens zur Ausbesserung von Fehlstellen eingesetzte wässrige Basislack derselbe ist, wie der, der zur Herstellung der Substrat-Mehrschichtlackierung mit Fehlstellen (Originallackierung) eingesetzt wurde.

Die vorstehend genannten Ausführungen bezüglich des erfindungsgemäßen Reaktionsprodukts und des wässrigen pigmentierten Basislacks gelten somit auch für den in Rede stehenden Einsatz des erfindungsgemäßen Verfahrens zum Ausbessern von Fehlstellen auf einer mehrschichtigen Lackierung. Dies gilt insbesondere auch für alle genannten bevorzugten, besonders bevorzugten und ganz besonders bevorzugten Merkmale. Es ist weiterhin bevorzugt, dass es sich bei den auszubessernden, erfindungsgemäßen Mehrschichtlackierungen um farbgebende Mehrschichtlackierungen, effektgebenden Lackierungen und farb- und effektgebenden Lackierungen handelt.

Die oben beschriebenen Fehlstellen auf der erfindungsgemäßen Mehrschichtlackierung lassen sich mit Hilfe des vorstehend beschriebenen erfindungsgemäßen Verfahrens ausbessern. Hierzu kann die auszubessernde Oberfläche der Mehrschichtlackierung zunächst angeschliffen werden. Bevorzugt wird das Anschleifen so ausgeführt, dass von der Originallackierung nur die Basislackierung und die Klarlackierung ab- oder angeschliffen werden, nicht aber die in der Regel darunter angeordnete Füllerschicht und Grundierungsschicht abgeschliffen wird. Auf diese Weise kann bei der Reparatur insbesondere auf die erneute Applikation von speziellen Grundierungen und Grundierfüllern verzichtet werden. Diese Form des Anschleifens hat sich insbesondere im Bereich der OEM-Automobilreparaturlackierung bewährt, da hier im Gegensatz zur Reparatur in einer Werkstatt in der Regel nur Fehlstellen im Schichtbereich Basislack und/oder Klarlack auftreten, jedoch insbesondere keine Fehlstellen im Bereich der darunter angeordneten Füller- und Grundierungsschichten auftreten. Fehlstellen in den letztgenannten Schichten sind eher im Bereich der Reparatur in Werkstätten anzutreffen. Beispielhaft seien Lackschäden wie Kratzer genannt, welche beispielsweise durch mechanische Einflüsse erzeugt werden und oft bis auf die Substratoberfläche (Metall- oder Kunststoffsubstrat) reichen.

Nach dem Anschleifen erfolgt die Applikation des pigmentierten wässrigen Basislacks auf die Fehlstelle in der Originallackierung durch pneumatische Zerstäubung. Nach der Applikation des pigmentierten wässrigen Basislacks kann dieser nach bekannten Methoden getrocknet werden. Beispielsweise kann der Basislack bei Raumtemperatur für 1 bis 60 Minuten getrocknet werden und darauf folgend bei gegebenenfalls leicht erhöhten Temperaturen von 30 bis 80°C getrocknet werden. Unter Ablüften und Trocknung ist im Rahmen der vorliegenden Erfindung ein Abdunsten von organischen Lösemitteln und/oder Wasser zu verstehen, wodurch der Lack noch nicht vollständig gehärtet wird. Im Rahmen der vorliegenden Erfindung ist es bevorzugt, dass der Basislack als Bindemittel ein Polyurethanharz und als Vernetzungsmittel ein Aminoplastharz, bevorzugt ein Melaminharz, enthält.

Anschließend wird ein handelsüblicher Klarlack nach ebenfalls gängigen Methoden appliziert. Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet.

Beim so genannten Niedrigtemperatureinbrennen erfolgt die Härtung vorzugsweise bei Temperaturen von 20 bis 90°C. Hier werden bevorzugt Zweikomponentenklarlacke eingesetzt. Wird, wie oben beschrieben, als weiteres Bindemittel ein Polyurethanharz und als Vernetzungsmittel ein Aminoplastharz eingesetzt, so kommt es bei diesen Temperaturen in der Basislackschicht nur zu einer geringen Vernetzung durch das Aminoplastharz. Neben seiner Funktion als Härter dient das Aminoplastharz hierbei auch der Plastifizierung und kann die Pigmentbenetzung unterstützen. Neben den Aminoplastharzen können auch unblockierte Isocyanate eingesetzt werden. Diese vernetzen je nach Art des eingesetzten Isocyanats schon bei Temperaturen ab 20 °C.

Beim sogenannten Hochtemperatureinbrennen erfolgt die Härtung vorzugsweise bei Temperaturen von 130 bis 150°C. Hier werden sowohl Einkomponenten- als auch Zweikomponentenklarlacke eingesetzt. Wird, wie oben beschrieben, als weiteres Bindemittel ein Polyurethanharz und als Vernetzungsmittel ein Aminoplastharz eingesetzt, so kommt es bei diesen Temperaturen in der Basislackschicht zu einer Vernetzung durch das Aminoplastharz.

Im Rahmen der Ausbesserung von Fehlstellen auf Mehrschichtlackierungen, das heißt also, wenn das Substrat eine Fehlstellen aufweisende Originallackierung darstellt, bevorzugt eine erfindungsgemäße Fehlstellen aufweisende Mehrschichtlackierung, wird bevorzugt das Niedrigtemperatureinbrennen angewendet.

Ein weiterer Aspekt der vorliegenden Erfindung ist die Verwendung des erfindungsgemäßen Reaktionsprodukts in pigmentierten wässrigen Basislacken zur Verbesserung der mechanischen Stabilität, insbesondere der Steinschlagbeständigkeit.

Die Qualität der Steinschlagbeständigkeit kann anhand des Steinschlagtests nach DIN 55966-1 bestimmt werden. Im Allgemeinen wird eine Mehrschichtlackierung auf ein mit einer Elektrotauchlackierung beschichtetes Stahlblech durch Auftragen eines Basislacks und Klarlacks und nachfolgendem Härten hergestellt. Die anschließende Beurteilung erfolgt nach DIN EN ISO 20567-1, wobei niedrigere Werte für eine bessere Steinschlagbeständigkeit stehen.

Im Folgenden wird die Erfindung anhand von Beispielen erläutert.

### Beispiele

### Bestimmung des zahlenmittleren Molekulargewichts:

Das zahlenmittlere Molekulargewicht wurde mittels Dampfdruckosmose bestimmt. Gemessen wurde mittels eines Dampfdruckosmometers (Modell 10.00, Fa. Knauer) an Konzentrationsreihen der zu untersuchenden Komponente in Toluol bei 50°C mit Benzophenon als Eichsubstanz zur Bestimmung der experimentellen Eichkonstante des eingesetzten Messgeräts (nach E. Schröder, G. Müller, K.-F. Arndt, "Leitfaden der Polymercharakterisierung", Akademie-Verlag, Berlin, S. 47 - 54, 1982, wobei darin allerdings Benzil als Eichsubstanz eingesetzt wurde).

### Herstellung erfindungsgemäßer Reaktionsprodukte (ER) sowie zum Vergleich eingesetzter Reaktionsprodukte (VR):

### ER1:

In einem 4 l Edelstahlreaktor, ausgestattet mit Ankerrührer, Thermometer, Kühler, Thermometer zur Kopftemperaturmessung wurden 128,1 g Pyromellitsäuredianhydrid (CAS-Nr. 89-32-7, Fa. Lonza) (0,5873 mol) und 2349,9 g lineares PolyTHF2000 (Fa. BASF SE) mit einer OH-Zahl (OH-Zahl Bestimmung nach DIN 53240) von 56,1 mg KOH/g (1,1750 mol) und 50,0 g Cyclohexan in Anwesenheit von 2,0 g Di-n-butylzinnoxid (Axion® CS 2455, Fa. Chemtura) auf 130°C Produkttemperatur aufgeheizt und bei dieser Temperatur gehalten.
Nach etwa drei Stunden war der Reaktionsansatz klar und es wurde erstmalig eine Säurezahl bestimmt. Der Ansatz wurde weitere drei Stunden bei 130°C gehalten, bis die Säurezahl bei 26,3 mg KOH / g lag (Theorie: 26,6 mg KOH / g).
Cyclohexan wurde bei 130°C unter Vakuum und Rühren abdestilliert. Mittels Gaschromatographie wurde ein Cyclohexan - Gehalt kleiner 0,15 Gew.-% bestimmt.

Das anfangs bei Raumtemperatur flüssige Polymer beginnt nach drei Tagen zu kristallisieren. Das feste Polymer lässt sich bei einer Temperatur von 80°C leicht aufschmelzen und bleibt auch bei Raumtemperatur über mindestens zwei Stunden flüssig, so dass es in diesem Zustand leicht einer Lackformulierung zugesetzt werden kann.

Feststoffgehalt (130°C, 60 min, 1g): 99,9%
Säurezahl: 26,3 mg KOH/g
Zahlenmittleres Molekulargewicht (Dampfdruckosmose): 4100 g/mol
Viskosität (Harz : Butylglykol (Fa. BASF SE) = 2 : 1): 3100 mPa·s,
(gemessen bei 23°C mit einem Rotationsviskosimeter der Fa. Brookfield, Typ CAP 2000+, Spindel 3, Scherrate: 2500 s⁻¹)

### ER2:

In einem 4 l Edelstahlreaktor, ausgestattet mit Ankerrührer, Thermometer, Kühler, Thermometer zur Kopftemperaturmessung wurden 89,8 g Pyromellitsäuredianhydrid (CAS-Nr. 89-32-7, Fa. Lonza) (0,4117 mol) und 2388,2 g lineares PolyTHF2900 (Terathane® 2900, Fa. Invista) mit einer OH-Zahl (OH-Zahl Bestimmung nach DIN 53240) von 38,7 mg KOH/g (0,8235 mol) und 20,0 g Cyclohexan in Anwesenheit von 2,0 g Di-n-butylzinnoxid (Axion® CS 2455, Fa. Chemtura) auf 130°C Produkttemperatur aufgeheizt und bei dieser Temperatur gehalten.
Nach etwa vier Stunden war der Reaktionsansatz klar und es wurde erstmalig eine Säurezahl bestimmt. Der Ansatz wurde weitere drei Stunden bei 130°C gehalten, bis die Säurezahl bei 19,0 mg KOH / g lag (Theorie: 18,6 mg KOH / g).
Cyclohexan wurde bei 130°C unter Vakuum und Rühren abdestilliert. Mittels Gaschromatographie wurde ein Cyclohexan - Gehalt kleiner 0,1 Gew.-% bestimmt.

Das anfangs bei Raumtemperatur flüssige Polymer beginnt nach zwei Tagen zu kristallisieren. Das feste Polymer lässt sich bei einer Temperatur von 80°C leicht aufschmelzen und bleibt auch bei Raumtemperatur über mindestens zwei Stunden flüssig, so dass es in diesem Zustand leicht einer Lackformulierung zugesetzt werden kann.

Feststoffgehalt (130°C, 60 min, 1g): 100,0%
Säurezahl: 19,0 mg KOH/g
Zahlenmittleres Molekulargewicht (Dampfdruckosmose): 5800 g/mol
Viskosität (Harz : Butylglykol (Fa. BASF SE) = 2 : 1): 7500 mPa·s,
(gemessen bei 23°C mit einem Rotationsviskosimeter der Fa. Brookfield, Typ CAP 2000+, Spindel 3, Scherrate: 1250 s⁻¹)

### ER3:

In einem 4 l Edelstahlreaktor, ausgestattet mit Ankerrührer, Thermometer, Kühler, Thermometer zur Kopftemperaturmessung wurden 285,3 g 4,4'-(4,4'-Isopropylidendiphenoxy)bis-(phthalsäureanhydrid) (CAS-Nr. 38103-06-9, Fa. Changzhou Sunlight Pharmaceutical Co.) (0,5481 mol) und 2192,7 g lineares PolyTHF2000 (Fa. BASF SE) mit einer OH-Zahl (OH-Zahl Bestimmung nach DIN 53240) von 56,1 mg KOH/g (1,0963 mol) und 20,0 g Cyclohexan in Anwesenheit von 2,0 g Di-n-butylzinnoxid (Axion® CS 2455, Fa. Chemtura) auf 130°C Produkttemperatur aufgeheizt und bei dieser Temperatur gehalten.
Nach etwa vier Stunden war der Reaktionsansatz klar und es wurde erstmalig eine Säurezahl bestimmt. Der Ansatz wurde weitere drei Stunden bei 130°C gehalten, bis die Säurezahl bei 24,6 mg KOH / g lag (Theorie: 24,8 mg KOH / g).
Cyclohexan wurde bei 130°C unter Vakuum und Rühren abdestilliert. Mittels Gaschromatographie wurde ein Cyclohexan - Gehalt kleiner 0,15 Gew.-% bestimmt.

Das anfangs bei Raumtemperatur flüssige Polymer beginnt nach wenigen Stunden zu kristallisieren. Das feste Polymer lässt sich bei einer Temperatur von 80°C leicht aufschmelzen und bleibt auch bei Raumtemperatur über mindestens zwei Stunden flüssig, so dass es in diesem Zustand leicht einer Lackformulierung zugesetzt werden kann.

Feststoffgehalt (130°C, 60 min, 1g): 99,9%
Säurezahl: 24,6 mg KOH/g
Zahlenmittleres Molekulargewicht (Dampfdruckosmose): 4300 g/mol
Viskosität (Harz : Butylglykol (Fa. BASF SE) = 2 : 1): 135 mPa·s,
(gemessen bei 23°C mit einem Rotationsviskosimeter der Fa. Brookfield, Typ CAP 2000+, Spindel 3, Scherrate: 10000 s⁻¹)

### ER4:

In einem 4 l Edelstahlreaktor, ausgestattet mit Ankerrührer, Thermometer, Kühler, Thermometer zur Kopftemperaturmessung wurden 178,3 g 4,4'-Oxydiphthalsäureanhydrid (CAS-Nr. 1823-59-2, Fa. Changzhou Sunlight Pharmaceutical Co.) (0,5748 mol) und 2299,7 g lineares PolyTHF2000 (Fa. BASF SE) mit einer OH-Zahl (OH-Zahl Bestimmung nach DIN 53240) von 56,1 mg KOH/g (1,1498 mol) und 20,0 g Cyclohexan in Anwesenheit von 2,0 g Di-n-butylzinnoxid (Axion® CS 2455, Fa. Chemtura) auf 130°C Produkttemperatur aufgeheizt und bei dieser Temperatur gehalten.
Nach etwa vier Stunden war der Reaktionsansatz klar und es wurde erstmalig eine Säurezahl bestimmt. Der Ansatz wurde weitere drei Stunden bei 130°C gehalten, bis die Säurezahl bei 26,2 mg KOH / g lag (Theorie: 26,0 mg KOH / g).
Cyclohexan wurde bei 130°C unter Vakuum und Rühren abdestilliert. Mittels Gaschromatographie wurde ein Cyclohexan - Gehalt kleiner 0,1 Gew.-% bestimmt.

Das anfangs bei Raumtemperatur flüssige Polymer beginnt nach einem Tag zu kristallisieren. Das feste Polymer lässt sich bei einer Temperatur von 80°C leicht aufschmelzen und bleibt auch bei Raumtemperatur über mindestens zwei Stunden flüssig, so dass es in diesem Zustand leicht einer Lackformulierung zugesetzt werden kann.

Feststoffgehalt (130°C, 60 min, 1g): 100,0%
Säurezahl: 26,2 mg KOH/g
Zahlenmittleres Molekulargewicht (Dampfdruckosmose): 4100 g/mol
Viskosität (Harz : Butylglykol (Fa. BASF SE) = 2 : 1): 5200 mPa·s,
(gemessen bei 23°C mit einem Rotationsviskosimeter der Fa. Brookfield, Typ CAP 2000+, Spindel 3, Scherrate: 1250 s⁻¹)

### ER5:

In einem 4 l Edelstahlreaktor, ausgestattet mit Ankerrührer, Thermometer, Kühler, Thermometer zur Kopftemperaturmessung wurden 115,8 g 1,2,3,4-Cyclobutantetracarboxylsäuredianhydrid (CAS-Nr. 4415-87-6, Fa. Synthon Chemicals) (0,5905 mol) und 2362,2 g lineares PolyTHF2000 (Fa. BASF SE) mit einer OH-Zahl (OH-Zahl Bestimmung nach DIN 53240) von 56,1 mg KOH/g (1,1811 mol) und 20,0 g Cyclohexan in Anwesenheit von 2,0 g Di-n-butylzinnoxid (Axion® CS 2455, Fa. Chemtura) auf 130°C Produkttemperatur aufgeheizt und bei dieser Temperatur gehalten.
Nach etwa drei Stunden war der Reaktionsansatz klar und es wurde erstmalig eine Säurezahl bestimmt. Der Ansatz wurde weitere drei Stunden bei 130°C gehalten, bis die Säurezahl bei 26,4 mg KOH / g lag (Theorie: 26,7 mg KOH / g).
Cyclohexan wurde bei 130°C unter Vakuum und Rühren abdestilliert. Mittels Gaschromatographie wurde ein Cyclohexan - Gehalt kleiner 0,15 Gew.-% bestimmt.

Das anfangs bei Raumtemperatur flüssige Polymer beginnt nach einem Tag zu kristallisieren. Das feste Polymer lässt sich bei einer Temperatur von 80°C leicht aufschmelzen und bleibt auch bei Raumtemperatur über mindestens zwei Stunden flüssig, so dass es in diesem Zustand leicht einer Lackformulierung zugesetzt werden kann.

Feststoffgehalt (130°C, 60 min, 1g): 99,9%
Säurezahl: 26,4 mg KOH/g
Zahlenmittleres Molekulargewicht (Dampfdruckosmose): 4100 g/mol
Viskosität (Harz : Butylglykol (Fa. BASF SE) = 2 : 1): 3300 mPa·s,
(gemessen bei 23°C mit einem Rotationsviskosimeter der Fa. Brookfield, Typ CAP 2000+, Spindel 3, Scherrate: 2500 s⁻¹)

### ER6:

In einem 4 l Edelstahlreaktor, ausgestattet mit Ankerrührer, Thermometer, Kühler, Thermometer zur Kopftemperaturmessung wurden 141,5 g Bicyclo[2.2.2]oct-7-en-2,3,5,6-tetracarbonsäuredianhydrid (CAS-Nr. 1719-83-1, Fa. SigmaAldrich) (0,57 mol) und 2280,0 g lineares PolyTHF2000 (Fa. BASF SE) mit einer OH-Zahl (OH-Zahl Bestimmung nach DIN 53240) von 56,1 mg KOH/g (1,14 mol) und 20,0 g Cyclohexan in Anwesenheit von 2,0 g Di-n-butylzinnoxid (Axion® CS 2455, Fa. Chemtura) auf 130°C Produkttemperatur aufgeheizt und bei dieser Temperatur gehalten.
Nach etwa drei Stunden war der Reaktionsansatz klar und es wurde erstmalig eine Säurezahl bestimmt. Der Ansatz wurde weitere drei Stunden bei 130°C gehalten, bis die Säurezahl bei 25,9 mg KOH / g lag (Theorie: 26,4 mg KOH / g).
Cyclohexan wurde bei 130°C unter Vakuum und Rühren abdestilliert. Mittels Gaschromatographie wurde ein Cyclohexan - Gehalt kleiner 0,15 Gew.-% bestimmt.

Das anfangs bei Raumtemperatur flüssige Polymer beginnt nach einem Tag zu kristallisieren. Das feste Polymer lässt sich bei einer Temperatur von 80°C leicht aufschmelzen und bleibt auch bei Raumtemperatur über mindestens zwei Stunden flüssig, so dass es in diesem Zustand leicht einer Lackformulierung zugesetzt werden kann.

Feststoffgehalt (130°C, 60 min, 1g): 99,9%
Säurezahl: 25,9 mg KOH/g
Zahlenmittleres Molekulargewicht (Dampfdruckosmose): 4000 g/mol
Viskosität (Harz : Butylglykol (Fa. BASF SE) = 2 : 1): 3700 mPa·s,
(gemessen bei 23°C mit einem Rotationsviskosimeter der Fa. Brookfield, Typ CAP 2000+, Spindel 3, Scherrate: 2500 s⁻¹)

### ER7:

In einem 4 l Edelstahlreaktor, ausgestattet mit Ankerrührer, Thermometer, Kühler, Thermometer zur Kopftemperaturmessung wurden 180,8 g Benzophenontetracarbonsäuredianhydrid (CAS-Nr. 2421-28-5, Fa. SigmaAldrich) (0,561 mol) und 2244,0 g lineares PolyTHF2000 (Fa. BASF SE) mit einer OH-Zahl (OH-Zahl Bestimmung nach DIN 53240) von 56,1 mg KOH/g (1,112 mol) und 20,0 g Cyclohexan in Anwesenheit von 2,0 g Di-n-butylzinnoxid (Axion® CS 2455, Fa. Chemtura) auf 130°C Produkttemperatur aufgeheizt und bei dieser Temperatur gehalten.
Nach etwa drei Stunden war der Reaktionsansatz klar und es wurde erstmalig eine Säurezahl bestimmt. Der Ansatz wurde weitere drei Stunden bei 130°C gehalten, bis die Säurezahl bei 25,7 mg KOH / g lag (Theorie: 26,0 mg KOH / g).
Cyclohexan wurde bei 130°C unter Vakuum und Rühren abdestilliert. Mittels Gaschromatographie wurde ein Cyclohexan - Gehalt kleiner 0,15 Gew.-% bestimmt.

Das anfangs bei Raumtemperatur flüssige Polymer beginnt nach einem Tag zu kristallisieren. Das feste Polymer lässt sich bei einer Temperatur von 80°C leicht aufschmelzen und bleibt auch bei Raumtemperatur über mindestens zwei Stunden flüssig, so dass es in diesem Zustand leicht einer Lackformulierung zugesetzt werden kann.

Feststoffgehalt (130°C, 60 min, 1g): 99,9%
Säurezahl: 25,7 mg KOH/g
Zahlenmittleres Molekulargewicht (Dampfdruckosmose): 4100 g/mol
Viskosität (Harz : Butylglykol (Fa. BASF SE) = 2 : 1): 4200 mPa·s,
(gemessen bei 23°C mit einem Rotationsviskosimeter der Fa. Brookfield, Typ CAP 2000+, Spindel 3, Scherrate: 2500 s⁻¹)

### VR1:

Als zum Vergleich eingesetztes Reaktionsprodukt diente ein Polyester, hergestellt gemäß Beispiel D, Spalte 16, Z. 37 bis 59 der DE 4009858 A, wobei als organisches Lösemittel Butylglykol anstatt Butanol verwendet wurde, das heißt als Lösemittel Butylglykol und Wasser enthalten sind. Die entsprechende Dispersion des Polyesters hat einen Festkörpergehalt von 60 Gew.-%.

### Herstellung von wässrigen Basislacken

Hinsichtlich der in den nachstehenden Tabellen angegebenen Formulierungsbestandteile und deren Mengen ist folgendes zu berücksichtigen. Wird auf ein Handelsprodukt oder eine anderswo beschriebene Herstellvorschrift verwiesen, ist unabhängig von der jeweils gewählten Hauptbenennung des Bestandteils genau dieses Handelsprodukt oder genau das im Rahmen der referenzierten Vorschrift hergestellte Produkt gemeint.

Besitzt also ein Formulierungsbestandteil die Hauptbenennung "Melaminformaldehydharz" und ist dazu ein Handelsprodukt angegeben, so wird das Melaminformaldehydharz als genau dieses Handelsprodukt eingesetzt. Gegebenenfalls im Handelsprodukt vorhandene weitere Bestandteile wie Lösemittel sind also zu berücksichtigen, wenn auf die Menge der Wirksubstanz (des Melaminformaldehydharzes) zurückgeschlossen werden soll.

Wird also für einen Formulierungsbestandteil auf eine Herstellvorschrift verwiesen und resultiert bei dieser Herstellung beispielsweise eine Polymer-Dispersion mit einem bestimmten Festkörper, so wird genau diese Dispersion eingesetzt. Es ist nicht maßgeblich, ob als Hauptbenennung der Begriff "Polymer-Dispersion" oder lediglich die Wirksubstanz, beispielsweise "Polymer", "Polyester" oder "polyurethanmodifiziertes Polyacrylat" gewählt wurde. Dies ist zu berücksichtigen, wenn auf die Menge der Wirksubstanz (des Polymers) zurückgeschlossen werden soll.

Alle in den Tabellen angegebenen Anteile sind Gewichtsteile.

### Herstellung eines nicht erfindungsgemäßen Wasserbasislacks V1, der direkt als farbgebende Schicht auf die kathodische Elektrotauchlackierung (KTL) aufgetragen werden kann.

Die in der Tabelle A unter "wässrige Phase" aufgeführten Komponenten wurden in der angegebenen Reihenfolge zu einer wässrigen Mischung zusammengerührt. Im nächsten Schritt wurde aus den unter "organische Phase" aufgeführten Komponenten eine organische Mischung hergestellt. Die organische Mischung wurde zur wässrigen Mischung hinzugegeben. Sodann wurde 10 Minuten lang gerührt und mit Hilfe von deionisiertem Wasser und Dimethylethanolamin auf einen pH Wert von 8 und eine Spritzviskosität von 58 mPa·s bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle A: Wasserbasislack V1**

| Komponente | Gewichtsteile |
|---|---|
| **Wässrige Phase** | |
| Wässrige Lösung von 3% Natrium-Lithium-Magnesium-Schichtsilikat Laponite® RD (Fa. Altana-Byk) und 3% Pluriol® P900 (Fa. BASF SE) | 27 |
| Deionisiertes Wasser | 15,9 |
| Butylglykol (Fa. BASF SE) | 3,5 |
| Hydroxyfunktionelles polyurethanmodifiziertes Polyacrylat; hergestellt gemäß S. 7, Z. 55 bis S.8, Z. 23 der DE 4437535 A1 | 2,4 |
| 50 Gew.-%ige Lösung Rheovis® PU 1250 (BASF SE) in Butylglykol; Rheologiemittel | 0,2 |
| VR1 | 2,5 |
| TMDD 50% BG (Fa. BASF SE), 52%ige Lösung von 2,4,7,9-Tetramethyl-5-decin-4,7-diol in Butylglykol | 1,2 |
| Luwipal® 052 (Fa. BASF SE), Melamin-Formaldehyd-Harz | 4,7 |
| 10%ige Lösung von N,N-Dimethylethanolamin (Fa. BASF SE) in Wasser | 0,5 |
| Pfropfmischpolymerisat auf Polyurethanbasis; hergestellt analog DE 19948004 - A1 (Seite 27 - Beispiel 2) | 19,6 |
| Isopropanol (Fa. BASF SE) | 1,4 |
| Byk-347® (Fa. Altana-Byk) | 0,5 |
| Pluriol® P 900 (Fa. BASF SE) | 0,3 |
| Tinuvin® 384-2 (Fa. BASF SE) | 0,6 |
| Tinuvin® 123 (Fa. BASF SE) | 0,3 |
| Rußpaste | 4,3 |
| Blaupaste | 11,4 |
| Mica-Schlämme | 2,8 |

| **Organische Phase** | |
|---|---|
| Aluminiumpigment (Fa. Altana-Eckart) | 0,3 |
| Butylglykol (Fa. BASF SE) | 0,3 |
| Pfropfmischpolymerisat auf Polyurethanbasis; hergestellt analog DE 19948004 - A1 (Seite 27 - Beispiel 2) | 0,3 |

### Herstellung der Blaupaste:

Die Blaupaste wurde aus 69,8 Gewichtsteilen einer gemäß der internationalen Patentanmeldung WO 91/15528 Bindemitteldispersion A hergestellten acrylierten Polyurethandispersion, 12,5 Gewichtsteilen Paliogen® Blau L 6482, 1,5 Gewichtsteilen Dimethylethanolamin (10%ig in VE-Wasser), 1,2 Gewichtsteilen eines handelsüblichen Polyethers (Pluriol® P900 der Firma BASF SE) und 15 Gewichtsteilen deionisiertem Wasser hergestellt.

### Herstellung der Rußpaste:

Die Rußpaste wurde aus 25 Gewichtsteilen einer gemäß der internationalen Patentanmeldung WO 91/15528 Bindemitteldispersion A hergestellten acrylierten Polyurethandispersion, 10 Gewichtsteilen Ruß, 0,1 Gewichtsteilen Methylisobutylketon, 1,36 Gewichtsteilen Dimethylethanolamin (10%ig in VE-Wasser), 2 Gewichtsteilen eines handelsüblichen Polyethers (Pluriol® P900 der Firma BASF SE) und 61,45 Gewichtsteilen deionisiertem Wasser hergestellt.

### Herstellung der Mica-Schlämme:

Die Mica-Schlämme wurde durch Vermischen mittels eines Rührorgans von 1,5 Gewichtsteilen Pfropfmischpolymerisat auf Polyurethanbasis; hergestellt analog DE 19948004 - A1 (Seite 27 - Beispiel 2) und 1,3 Gewichtsteilen der handelsüblichen Mica Mearlin Ext. Fine Violet 539V der Firma Merck erhalten.

### Herstellung der erfindungsgemäßen Wasserbasislacke E1 - E7, die direkt als farbgebende Schicht auf die kathodische Elektrotauchlackierung (KTL) aufgetragen werden können.

Die Wasserbasislacke E1 - E7 wurden analog Tabelle A hergestellt, wobei allerdings statt VR1 das Reaktionsprodukt ER1 (Wasserbasislack E1), das Reaktionsprodukt ER2 (Wasserbasislack E2), das Reaktionsprodukt ER3 (Wasserbasislack E3), das Reaktionsprodukt ER4 (Wasserbasislack E4), das Reaktionsprodukt ER5 (Wasserbasislack E5), das Reaktionsprodukt ER6 (Wasserbasislack E6) beziehungsweise das Reaktionsprodukt ER7 (Wasserbasislack E7) eingesetzt wurde. Dabei wurde durch Ausgleich der Lösemittelmenge beziehungsweise durch Berücksichtigung der Festkörper der zuzugebenden Komponente der jeweils selbe Anteil des Reaktionsprodukts ER1 beziehungsweise ER2 - ER7 eingesetzt.

**Tabelle B: Wasserbasislacke V1, E1 - E7**

| | **Reaktionsprodukt** |
|---|---|
| Wasserbasislack V1 | VR1 |
| Wasserbasislack E1 | ER1 |
| Wasserbasislack E2 | ER2 |
| Wasserbasislack E3 | ER3 |
| Wasserbasislack E4 | ER4 |
| Wasserbasislack E5 | ER5 |
| Wasserbasislack E6 | ER6 |
| Wasserbasislack E7 | ER7 |

### Vergleich zwischen den Wasserbasislacken V1 und E1 - E7

### Steinschlagbeständigkeit:

Zur Bestimmung der Steinschlagbeständigkeit wurden die Mehrschichtlackierungen nach der folgenden allgemeinen Vorschrift hergestellt:
Ein mit einer KTL (kathodische Elektrotauchlackierung) beschichtetes Stahlblech der Abmessungen 10 x 20 cm diente als Substrat.
Auf dieses Blech wurde zunächst der jeweilige Basislack (Tabelle B) mit einer Zielschichtdicke (Trockenfilmschichtdicke) von 20 Mikrometern pneumatisch appliziert. Nach 1 min Ablüften des Basislacks bei Raumtemperatur wurde der Basislack über 10 min bei 70 °C im Umluftofen zwischengetrocknet. Auf die zwischengetrocknete Wasserbasislackschicht wurde ein üblicher Zweikomponentenklarlack (Progloss® 372 der Firma BASF Coatings GmbH) mit einer Zielschichtdicke (Trockenfilmschichtdicke) von 40 Mikrometern appliziert. Die resultierende Klarlackschicht wurde während 20 Minuten bei Raumtemperatur abgelüftet. Anschließend wurden die Wasserbasislackschicht und die Klarlackschicht in einem Umluftofen während 30 Minuten bei 160°C gehärtet.

Die so erhaltenen Mehrschichtlackierungen wurden hinsichtlich ihrer Steinschlagbeständigkeit untersucht. Dazu wurde der Steinschlagtest nach DIN 55966-1 durchgeführt. Die Beurteilung der Ergebnisse des Steinschlagtests wurde nach DIN EN ISO 20567-1 durchgeführt. Niedrigere Werte stehen für eine bessere Steinschlagbeständigkeit.

Die Ergebnisse finden sich in der Tabelle 1. Die Angabe des Wasserbasislacks (WBL) gibt jeweils an, welcher WBL in der jeweiligen Mehrschichtlackierung eingesetzt wurde.

**Tabelle 1: Steinschlagbeständigkeit der Wasserbasislacke V1 und E1 - E7**

| **WBL** | **Steinschlagergebnis** |
|---|---|
| V1 | 2,5 |
| E1 | 1,5 |
| E2 | 1,5 |
| E3 | 1,5 |
| E4 | 1,5 |
| E5 | 1,5 |
| E6 | 1,5 |
| E7 | 1,5 |

Die Ergebnisse untermauern, dass der Einsatz der erfindungsgemäßen Reaktionsprodukte in Basislacken die Steinschlagbeständigkeit im Vergleich zum Wasserbasislack 1 deutlich erhöht.

### Herstellung eines nicht erfindungsgemäßen Wasserbasislacks V2, der direkt als nicht farbgebende Schicht auf die kathodische Elektrotauchlackierung (KTL) aufgetragen werden kann.

Die in der Tabelle C unter "wässrige Phase" aufgeführten Komponenten wurden in der angegebenen Reihenfolge zu einer wässrigen Mischung zusammengerührt. Sodann wurde 10 Minuten lang gerührt und mit Hilfe von deionisiertem Wasser und Dimethylethanolamin auf einen pH Wert von 8 und eine Spritzviskosität von 58 mPa·s bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle C: Wasserbasislack V2**

| Komponente | Gewichtsteile |
|---|---|
| **Wässrige Phase** | |
| Wässrige Lösung von 3% Natrium-Lithium-Magnesium-Schichtsilikat Laponite® RD (Fa. Altana-Byk) und 3% Pluriol® P900 (Fa. BASF SE) | 14 |
| Deionisiertes Wasser | 16 |
| Butylglykol (Fa. BASF SE) | 1,4 |
| VR1 | 2,3 |
| 10 Gew.-%ige Lösung Rheovis® AS 1130 (BASF SE) in Wasser; Rheologiemittel | 6 |
| TMDD 50% BG (Fa. BASF SE), 52%ige Lösung von 2,4,7,9-Tetramethyl-5-decin-4,7-diol in Butylglykol | 1,6 |
| Cymel® 1133(Fa. Cytec), Melamin-Formaldehyd-Harz | 5,9 |
| 10%ige Lösung von N,N-Dimethylethanolamin (Fa. BASF SE) in Wasser | 0,4 |
| Polyurethandispersion - hergestellt nach WO 92/15405 (Seite 14, Zeile 13 bis Seite 15, Zeile 28) | 20 |
| 2-Ethylhexanol (Fa. BASF SE) | 3,5 |
| Triisobutylphosphat (Fa. Bayer) | 2,5 |
| Nacure® 2500 (Fa. King Industries) | 0,6 |
| Weißpaste | 24 |
| Rußpaste | 1,8 |

### Herstellung der Rußpaste:

Die Rußpaste wurde aus 25 Gewichtsteilen einer gemäß der internationalen Patentanmeldung WO 91/15528 Bindemitteldispersion A hergestellten acrylierten Polyurethandispersion, 10 Gewichtsteilen Ruß, 0,1 Gewichtsteilen Methylisobutylketon, 1,36 Gewichtsteilen Dimethylethanolamin (10%ig in VE-Wasser), 2 Gewichtsteilen eines handelsüblichen Polyethers (Pluriol® P900 der Firma BASF SE) und 61,45 Gewichtsteilen deionisiertem Wasser hergestellt.

### Herstellung der Weißpaste:

Die Weißpaste wurde aus 43 Gewichtsteilen einer gemäß der internationalen Patentanmeldung WO 91/15528 Bindemitteldispersion A hergestellten acrylierten Polyurethandispersion, 50 Gewichtsteilen Titan Rutil 2310, 3 Gewichtsteilen 1-Propoxy-2-Propanol und 4 Gewichtsteilen deionisiertem Wasser hergestellt.

### Herstellung der erfindungsgemäßen Wasserbasislacke E8 - E14, die direkt als nicht farbgebende Schicht auf die kathodische Elektrotauchlackierung (KTL) aufgetragen werden können.

Die Wasserbasislacke E8 - E14 wurden analog Tabelle C hergestellt, wobei allerdings statt VR1 das Reaktionsprodukt ER1 (Wasserbasislack E8), das Reaktionsprodukt ER2 (Wasserbasislack E9), das Reaktionsprodukt ER3 (Wasserbasislack E10), das Reaktionsprodukt ER4 (Wasserbasislack E11), das Reaktionsprodukt ER5 (Wasserbasislack E12), das Reaktionsprodukt ER6 (Wasserbasislack E13), beziehungsweise das Reaktionsprodukt ER7 (Wasserbasislack E14) eingesetzt wurden. Dabei wurde durch Ausgleich der Lösemittelmenge beziehungsweise durch Berücksichtigung der Festkörper der zuzugebenden Komponente der jeweils selbe Anteil des Reaktionsprodukts ER1 beziehungsweise ER2-ER7 eingesetzt.

**Tabelle D: Basislacke V2, E8 - E14**

| | **Reaktionsprodukt** |
|---|---|
| Wasserbasislack V2 | VR1 |
| Wasserbasislack E8 | ER1 |
| Wasserbasislack E9 | ER2 |
| Wasserbasislack E10 | ER3 |
| Wasserbasislack E11 | ER4 |
| Wasserbasislack E12 | ER5 |
| Wasserbasislack E13 | ER6 |
| Wasserbasislack E14 | ER7 |

### Herstellung eines nicht erfindungsgemäßen Wasserbasislacks V3, der direkt als farbgebende Schicht auf die Wasserbasislacke V2 und E8 - E14 aufgetragen werden kann.

Die in der Tabelle E unter "wässrige Phase" aufgeführten Komponenten wurden in der angegebenen Reihenfolge zu einer wässrigen Mischung zusammengerührt. Im nächsten Schritt wurde aus den unter "organische Phase" aufgeführten Komponenten eine organische Mischung hergestellt. Die organische Mischung wurde zur wässrigen Mischung hinzugegeben. Sodann wurde 10 Minuten lang gerührt und mit Hilfe von deionisiertem Wasser und Dimethylethanolamin auf einen pH Wert von 8 und eine Spritzviskosität von 58 mPa·s bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle E: Wasserbasislack V3**

| Komponente | Gewichtsteile |
|---|---|
| **Wässrige Phase** | |
| Wässrige Lösung von 3% Natrium-Lithium-Magnesium-Schichtsilikat Laponite® RD (Fa. Altana-Byk) und 3% Pluriol® P900 (Fa. BASF SE) | 20,35 |
| Deionisiertes Wasser | 17,27 |
| Butylglykol (Fa. BASF SE) | 2,439 |
| Hydroxyfunktionelles polyurethanmodifiziertes Polyacrylat; hergestellt gemäß S. 7, Z. 55 bis S.8, Z. 23 der DE 4437535 A1 | 2,829 |
| 50 Gew.-%ige Lösung Rheovis® PU 1250 (BASF SE) in Butylglykol; Rheologiemittel | 0,234 |
| 10 Gew.-%ige Lösung Rheovis® AS 1130 (BASF SE) in Wasser; Rheologiemittel | 4,976 |
| TMDD 50% BG (Fa. BASF SE), 52%ige Lösung von 2,4,7,9-Tetramethyl-5-decin-4,7-diol in Butylglykol | 1,317 |
| Cymel® 1133(Fa. Cytec), Melamin-Formaldehyd-Harz | 3,512 |
| 10%ige Lösung von N,N-Dimethylethanolamin (Fa. BASF SE) in Wasser | 1,356 |
| Polyurethandispersion - hergestellt nach WO 92/15405 (Seite 14, Zeile 13 bis Seite 15, Zeile 28) | 24,976 |
| Isopropanol (Fa. BASF SE) | 1,659 |
| Byk-347® (Fa. Altana-Byk) | 0,537 |
| Pluriol® P 900 (Fa. BASF SE) | 0,39 |
| 2-Ethylhexanol (Fa. BASF SE) | 1,854 |
| Triisobutylphosphat (Fa. Bayer) | 1,151 |
| Nacure® 2500 (Fa. King Industries) | 0,39 |
| Tinuvin® 384-2 (Fa. BASF SE) | 0,605 |
| Tinuvin® 123 (Fa. BASF SE) | 0,39 |
| Blaupaste | 0,605 |

| **Organische Phase** | |
|---|---|
| Aluminiumpigment 1 (Fa. Altana-Eckart) | 4,585 |
| Aluminiumpigment 2 (Fa. Altana-Eckart) | 0,907 |
| Butylglykol (Fa. BASF SE) | 3,834 |
| Pfropfmischpolymerisat auf Polyurethanbasis; hergestellt analog DE 19948004 - A1 (Seite 27 - Beispiel 2) | 3,834 |

### Herstellung der Blaupaste:

Die Blaupaste wurde aus 69,8 Gewichtsteilen einer gemäß der internationalen Patentanmeldung WO 91/15528 Bindemitteldispersion A hergestellten acrylierten Polyurethandispersion, 12,5 Gewichtsteilen Paliogen® Blau L 6482, 1,5 Gewichtsteilen Dimethylethanolamin (10%ig in VE-Wasser), 1,2 Gewichtsteilen eines handelsüblichen Polyethers (Pluriol® P900 der Firma BASF SE) und 15 Gewichtsteilen deionisiertem Wasser hergestellt.

### Vergleich der Wasserbasislacke V2 und E8 - E14

Zur Bestimmung der Steinschlagbeständigkeit wurden die Mehrschichtlackierungen nach der folgenden allgemeinen Vorschrift hergestellt:
Ein mit einer KTL beschichtetes Stahlblech der Abmessungen 10 x 20 cm diente als Substrat.
Auf dieses Blech wurde zunächst der jeweilige Basislack (Tabelle D) mit einer Zielschichtdicke (Trockenfilmschichtdicke) von 15 Mikrometern pneumatisch appliziert. Nach 4 min Ablüften des Basislacks bei Raumtemperatur wurde der Wasserbasislack V3 in einer Zielschichtdicke (Trockenfilmschichtdicke) von 15 Mikrometern pneumatisch appliziert, anschließend 4 min bei Raumtemperatur abgelüftet und danach über 10 min bei 70 °C im Umluftofen zwischengetrocknet. Auf die zwischengetrocknete Wasserbasislackschicht wurde ein üblicher Zweikomponentenklarlack (Progloss® 372 der Firma BASF Coatings GmbH) mit einer Zielschichtdicke (Trockenfilmschichtdicke) von 40 Mikrometern appliziert. Die resultierende Klarlackschicht wurde während 20 Minuten bei Raumtemperatur abgelüftet. Anschließend wurden die Wasserbasislackschicht und die Klarlackschicht in einem Umluftofen während 30 Minuten bei 160°C gehärtet.

Die so erhaltenen Mehrschichtlackierungen wurden hinsichtlich ihrer Steinschlagbeständigkeit untersucht. Dazu wurde der Steinschlagtest nach DIN 55966-1 durchgeführt. Die Beurteilung der Ergebnisse des Steinschlagtests wurde nach DIN EN ISO 20567-1 durchgeführt. Niedrigere Werte stehen für eine bessere Steinschlagbeständigkeit.

Die Ergebnisse finden sich in der Tabelle 2. Die Angabe des Wasserbasislacks (WBL) gibt jeweils an, welche WBL in der jeweiligen Mehrschichtlackierung eingesetzt wurde.

**Tabelle 2: Steinschlagbeständigkeit der Wasserbasislacke V2 und E8 - E14**

| **WBL** | **Steinschlagergebnis** |
|---|---|
| V2 + V3 | 2,5 |
| E8 + V3 | 1,5 |
| E9 + V3 | 1,5 |
| E10 + V3 | 1,5 |
| E11 + V3 | 1,5 |
| E12 + V3 | 1,5 |
| E13 + V3 | 1,5 |
| E14 + V3 | 1,5 |

Die Ergebnisse untermauern wiederum, dass der Einsatz der erfindungsgemäßen Reaktionsprodukte in Basislacken die Steinschlagbeständigkeit im Vergleich zu nicht erfindungsgemäßen Systemen deutlich erhöht.

## Patentansprüche

1. Pigmentierter wässriger Basislack enthaltend ein Polyether-basiertes Reaktionsprodukt, welches herstellbar ist durch Umsetzung von
(a) mindestens einem cyclischen Tetracarbonsäuredianhydrid mit einem die beiden Anhydridgruppen verbrückenden aliphatischen, aromatischen oder araliphatischen Rest X,
mit
(b) mindestens einem Polyether der allgemeinen Strukturformel (II) 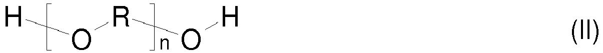 worin
R ein C₃- bis C₆-Alkylenrest ist und n entsprechend so gewählt ist, dass der Polyether (b) ein zahlenmittleres Molekulargewicht von 500 bis 5000 g/mol besitzt,
wobei die Komponenten (a) und (b) bei der Umsetzung in einem molaren Verhältnis von 0,7/2,3 bis 1,6/1,7 eingesetzt werden und das resultierende Reaktionsprodukt eine Säurezahl von 5 bis 80 mg KOH/g besitzt.

2. Basislack nach Anspruch 1, **dadurch gekennzeichnet, dass** der Polyether (b) ein zahlenmittleres Molekulargewicht von 650 bis 4000 g/mol besitzt.

3. Basislack nach Anspruch 1 oder 2, **dadurch gekennzeichnet, dass** es sich bei der Gruppe R gemäß der allgemeinen Strukturformel (II) um Tetramethylenreste handelt.

4. Basislack nach einem der Ansprüche 1 bis 3, **dadurch gekennzeichnet, dass** die Komponenten (a) und (b) in einem molaren Verhältnis von 0,45/1 bis 0,55/1 eingesetzt werden.

5. Basislack nach einem der Ansprüche 1 bis 4, **dadurch gekennzeichnet, dass** das Polyether-basierte Reaktionsprodukt ein zahlenmittleres Molekulargewicht von 1500 bis 15000 g/mol besitzt.

6. Basislack nach einem der Ansprüche 1 bis 5, **dadurch gekennzeichnet, dass** es eine Säurezahl von 8 bis 60 mg KOH/g aufweist.

7. Pigmentierter wässriger Basislack gemäß einem der Ansprüche 1 bis 6, **dadurch gekennzeichnet, dass** die Summe über die gewichtsprozentualen Anteile, bezogen auf das Gesamtgewicht des pigmentierten wässrigen Basislacks, aller Polyether-basierten Reaktionsprodukte 0,1 bis 20 Gew.-% beträgt.

8. Pigmentierter wässriger Basislack nach einem der Ansprüche 1 bis 7, **dadurch gekennzeichnet, dass** er ein mittels olefinisch ungesättigten Monomeren gepfropftes Polyurethanharz, welches zudem Hydroxylgruppen enthält, sowie ein Melaminharz umfasst.

9. Basislack nach Anspruch 1 bis 8, **dadurch gekennzeichnet, dass** das Tetracarbonsäuredianhydrid (a) Pyromellitsäuredianhydrid, Cyclobutantetracarbonsäuredianhydrid, Benzophenontetracarbonsäuredianhydrid, Bicyclooctentetracarbonsäuredianhydrid und/oder Diphenylsulfontetracarbonsäuredianhydrid ist.

10. Basislack nach Anspruch 1 bis 8, **dadurch gekennzeichnet, dass** ein Polyether-basiertes Reaktionsprodukt enthalten ist, welches herstellbar ist durch Umsetzung von
(a1) mindestens einem Tetracarbonsäuredianhydrid der allgemeinen Strukturformel (I) 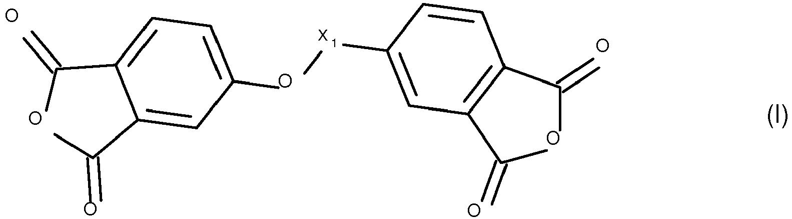 worin
X₁ eine Bindung oder ein aliphatischer, aromatischer oder araliphatischer Rest ist, mit
(b) mindestens einem Polyether der allgemeinen Strukturformel (II) 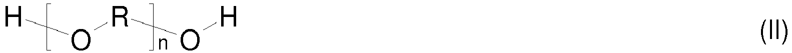 worin
R ein C₃- bis C₆-Alkylenrest ist und n entsprechend so gewählt ist, dass der Polyether (b) ein zahlenmittleres Molekulargewicht von 500 bis 5000 g/mol besitzt,
wobei die Komponenten (a) und (b) bei der Umsetzung in einem molaren Verhältnis von 0,7/2,3 bis 1,6/1,7 eingesetzt werden und das resultierende Reaktionsprodukt eine Säurezahl von 5 bis 80 mg KOH/g besitzt.

11. Basislack nach Anspruch 10, **dadurch gekennzeichnet, dass** das Tetracarbonsäuredianhydrid (a1) 4,4'-Oxydiphtalanhydrid oder 4,4'-(4,4'-Isopropylidendiphenoxy)bis(phthalanhydrid) ist.

12. Polyether-basiertes Reaktionsprodukt, welches herstellbar ist durch Umsetzung von
(a1) mindestens einem Tetracarbonsäuredianhydrid der allgemeinen Strukturformel (I) 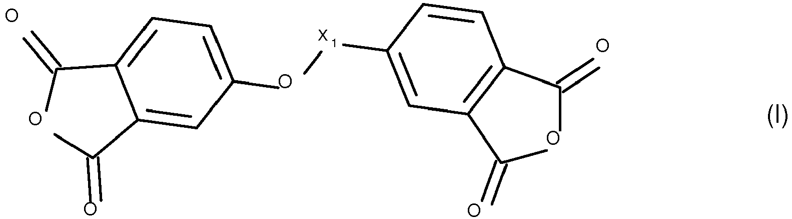 worin
X₁ eine Bindung oder ein aliphatischer, aromatischer oder araliphatischer Rest ist, mit
(b) mindestens einem Polyether der allgemeinen Strukturformel (II) 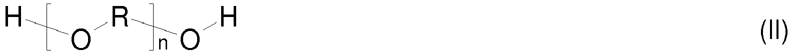
worin
R ein C₃- bis C₆-Alkylenrest ist und n entsprechend so gewählt ist, dass der Polyether (b) ein zahlenmittleres Molekulargewicht von 500 bis 5000 g/mol besitzt,
wobei die Komponenten (a) und (b) bei der Umsetzung in einem molaren Verhältnis von 0,7/2,3 bis 1,6/1,7 eingesetzt werden und das resultierende Reaktionsprodukt eine Säurezahl von 5 bis 80 mg KOH/g besitzt.

13. Polyether-basiertes Reaktionsprodukt nach Anspruch 12, **dadurch gekennzeichnet, dass** es sich bei der Gruppe X₁ gemäß der allgemeinen Strukturformel (I) um einen 1 bis 30 Kohlenstoffatomen oder 1 bis 16 Kohlenstoffatomen enthaltenden Rest handelt.

14. Polyether-basiertes Reaktionsprodukt nach Anspruch 12, **dadurch gekennzeichnet dass**,
X₁= eine Bindung und damit 4,4'-Oxydiphtalanhydrid entspricht
oder
X₁= 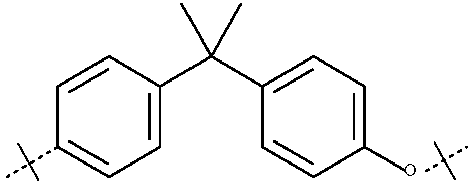 und damit 4,4'-(4,4'-Isopropylidendiphenoxy)bis(phthalanhydrid) entspricht,
ist.

15. Verwendung eines pigmentierten wässrigen Basislacks nach einem der Ansprüche 1 bis 11 oder Verwendung des Reaktionsprodukts nach einem der Ansprüche 12 bis 14 zur Verbesserung der Steinschlagbeständigkeit von Lackierungen, welche unter Einsatz des Basislacks hergestellt werden.

16. Verfahren zur Herstellung einer mehrschichtigen Lackierung, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,
**dadurch gekennzeichnet, dass** in Stufe (1) ein pigmentierter wässriger Basislack gemäß einem der Ansprüche 1 bis 11 oder ein pigmentierter wässriger Basislack enthaltend das Reaktionsprodukt nach einem der Ansprüche 12 bis 14 eingesetzt wird.

17. Verfahren nach Anspruch 16, **dadurch gekennzeichnet, dass** das Substrat aus Stufe (1) ein mit einer gehärteten Elektrotauchlackschicht beschichtetes metallisches Substrat ist und alle auf die Elektrotauchlackschicht applizierten Schichten gemeinsam gehärtet werden.

18. Verfahren nach Anspruch 16, **dadurch gekennzeichnet, dass** es sich bei dem Substrat aus Stufe (1) um ein Metall- oder Kunststoffsubstrat handelt.

19. Mehrschichtlackierung, herstellbar nach dem Verfahren gemäß einem der Ansprüche 16 bis 18.

## Claims

1. Pigmented aqueous basecoat material comprising a polyether-based reaction product which is preparable by reaction of
(a) at least one cyclic tetracarboxylic dianhydride having an aliphatic, aromatic or araliphatic radical X bridging the two anhydride groups with
(b) at least one polyether of the general structural formula (II) 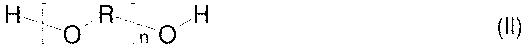 in which
R is a C₃ to C₆ alkylene radical and n is selected accordingly such that the polyether (b) possesses a number-average molecular weight of 500 to 5000 g/mol,
the components (a) and (b) being used in the reaction in a molar ratio of 0.7/2.3 to 1.6/1.7 and the resulting reaction product possessing an acid number of 5 to 80 mg KOH/g.

2. Basecoat material according to Claim 1, **characterized in that** the polyether (b) possesses a number-average molecular weight of 650 to 4000 g/mol.

3. Basecoat material according to Claim 1 or 2, **characterized in that** the group R according to the general structural formula (II) comprises tetramethylene radicals.

4. Basecoat material according to any of Claims 1 to 3, **characterized in that** the components (a) and (b) are used in a molar ratio of 0.45/1 to 0.55/1.

5. Basecoat material according to any of Claims 1 to 4, **characterized in that** the polyether-based reaction product possesses a number-average molecular weight of 1500 to 15 000 g/mol.

6. Basecoat material according to any of Claims 1 to 5, **characterized in that** it has an acid number of 8 to 60 mg KOH/g.

7. Pigmented aqueous basecoat material according to any of Claims 1 to 6, **characterized in that** the sum total of the weight-percentage fractions, based on the total weight of the pigmented aqueous basecoat material, of all polyether-based reaction products is 0.1 to 20 wt%.

8. Pigmented aqueous basecoat material according to any of Claims 1 to 7, **characterized in that** it comprises a melamine resin and also a polyurethane resin that is grafted by means of olefinically unsaturated monomers and that further comprises hydroxyl groups.

9. Basecoat material according to Claim 1 to 8, **characterized in that** the tetracarboxylic dianhydride (a) is pyromellitic dianhydride, cyclobutanetetracarboxylic dianhydride, benzophenonetetracarboxylic dianhydride, bicyclooctenetetracarboxylic dianhydride and/or diphenylsulfonyltetracarboxylic dianhydride.

10. Basecoat material according to Claim 1 to 8, **characterized in that** it comprises a polyether-based reaction product which is preparable by reaction of
(a1) at least one tetracarboxylic dianhydride of the general structural formula (I) 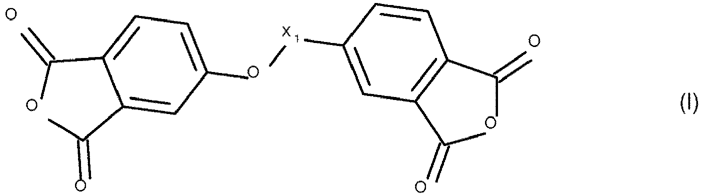 in which
X₁ is a bond or an aliphatic, aromatic or araliphatic radical
with
(b) at least one polyether of the general structural formula (II) 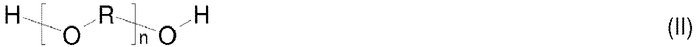 in which
R is a C₃ to C₆ alkylene radical and n is selected accordingly such that the polyether (b) possesses a number-average molecular weight of 500 to 5000 g/mol,
the components (a) and (b) being used in the reaction in a molar ratio of 0.7/2.3 to 1.6/1.7 and the resulting reaction product possessing an acid number of 5 to 80 mg KOH/g.

11. Basecoat material according to Claim 10, **characterized in that** the tetracarboxylic dianhydride (a1) is 4,4'-oxydiphthalic anhydride or 4,4'-(4,4'-isopropylidenediphenoxy)bis(phthalic anhydride).

12. Polyether-based reaction product which is preparable by reaction of
(a1) at least one tetracarboxylic dianhydride of the general structural formula (I) 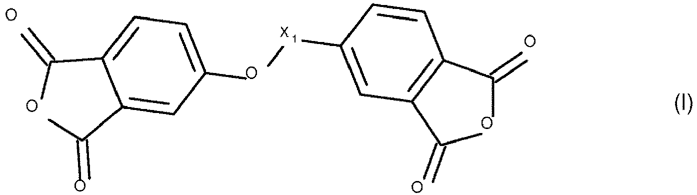 in which
X₁ is a bond or an aliphatic, aromatic or araliphatic radical
with
(b) at least one polyether of the general structural formula (II) 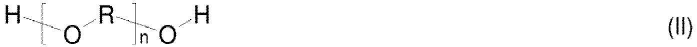 in which
R is a C₃ to C₆ alkylene radical and n is selected accordingly such that the polyether (b) possesses a number-average molecular weight of 500 to 5000 g/mol,
the components (a) and (b) being used in the reaction in a molar ratio of 0.7/2.3 to 1.6/1.7 and the resulting reaction product possessing an acid number of 5 to 80 mg KOH/g.

13. Polyether-based reaction product according to Claim 12, **characterized in that** the group X₁ according to the general structural formula (I) is a radical comprising 1 to 30 carbon atoms or 1 to 16 carbon atoms.

14. Polyether-based reaction product according to Claim 12, **characterized in that**
X₁ is a bond and therefore corresponds to 4,4'-oxydiphthalic anhydride
or
X₁ is 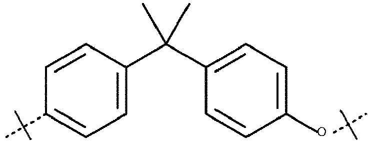 and therefore corresponds to 4,4'-(4,4'-isopropylidene-diphenoxy)bis(phthalic anhydride).

15. Use of a pigmented aqueous basecoat material according to any of Claims 1 to 11 or use of the reaction product according to any of Claims 12 to 14 for improving the stonechip resistance of paint systems produced using the basecoat material.

16. Method for producing a multicoat paint system by
(1) applying a pigmented aqueous basecoat material to a substrate,
(2) forming a polymer film from the coating material applied in stage (1),
(3) applying a clearcoat material to the resultant basecoat, and subsequently
(4) curing the basecoat together with the clearcoat,
**characterized in that** a pigmented aqueous basecoat material according to any of Claims 1 to 11 or a pigmented aqueous basecoat material comprising the reaction product according to any of Claims 12 to 14 is used in step (1).

17. Method according to Claim 16, **characterized in that** the substrate from stage (1) is a metallic substrate coated with a cured electrocoat, and all coats applied to the electrocoat are cured jointly.

18. Method according to Claim 16, **characterized in that** the substrate from stage (1) is a metal or plastics substrate.

19. Multicoat paint system producible by the method according to any of Claims 16 to 18.

## Revendications

1. Vernis de base aqueux pigmenté contenant un produit de réaction à base d'un polyéther, qui peut être fabriqué par mise en réaction de :
(a) au moins un dianhydride d'acide tétracarboxylique cyclique contenant un radical X aliphatique, aromatique ou araliphatique pontant les deux groupes anhydride, avec
(b) au moins un polyéther de la formule structurale générale (II) : 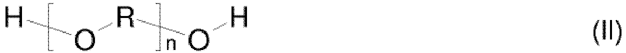 dans laquelle
R représente un radical alkylène en C₃ à C₆, et n est choisi de telle sorte que le polyéther (b) présente un poids moléculaire moyen en nombre de 500 à 5 000 g/mol, les composants (a) et (b) étant utilisés lors de la réaction en un rapport molaire de 0,7/2,3 à 1,6/1,7, et le produit de réaction résultant présentant un indice d'acidité de 5 à 80 mg de KOH/g.

2. Vernis de base selon la revendication 1, **caractérisé en ce que** le polyéther (b) présente un poids moléculaire moyen en nombre de 650 à 4 000 g/mol.

3. Vernis de base selon la revendication 1 ou 2, **caractérisé en ce que** le groupe R selon la formule structurale générale (II) consiste en des radicaux tétraméthylène.

4. Vernis de base selon l'une quelconque des revendications 1 à 3, **caractérisé en ce que** les composants (a) et (b) sont utilisés en un rapport molaire de 0,45/1 à 0,55/1.

5. Vernis de base selon l'une quelconque des revendications 1 à 4, **caractérisé en ce que** le produit de réaction à base d'un polyéther présente un poids moléculaire moyen en nombre de 1 500 à 15 000 g/mol.

6. Vernis de base selon l'une quelconque des revendications 1 à 5, **caractérisé en ce qu'**il présente un indice d'acidité de 8 à 60 mg de KOH/g.

7. Vernis de base aqueux pigmenté selon l'une quelconque des revendications 1 à 6, **caractérisé en ce que** la somme des proportions en pourcentages en poids, par rapport au poids total du vernis de base aqueux pigmenté, de tous les produits de réaction à base d'un polyéther est de 0,1 à 20 % en poids.

8. Vernis de base aqueux pigmenté selon l'une quelconque des revendications 1 à 7, **caractérisé en ce qu'**il comprend une résine de polyuréthane greffée avec des monomères oléfiniquement insaturés, qui contient en outre des groupes hydroxyle, ainsi qu'une résine de mélamine.

9. Vernis de base selon les revendications 1 à 8, **caractérisé en ce que** le dianhydride d'acide tétracarboxylique (a) est le dianhydride de l'acide pyromellitique, le dianhydride de l'acide cyclobutane-tétracarboxylique, le dianhydride de l'acide benzophénone-tétracarboxylique, le dianhydride de l'acide bicyclooctène-tétracarboxylique et/ou le dianhydride de l'acide diphénylsulfone-tétracarboxylique.

10. Vernis de base selon les revendications 1 à 8, **caractérisé en ce qu'**un produit de réaction à base d'un polyéther est contenu, qui peut être fabriqué par mise en réaction de :
(a1) au moins un dianhydride d'acide tétracarboxylique de la formule structurale générale (I) : 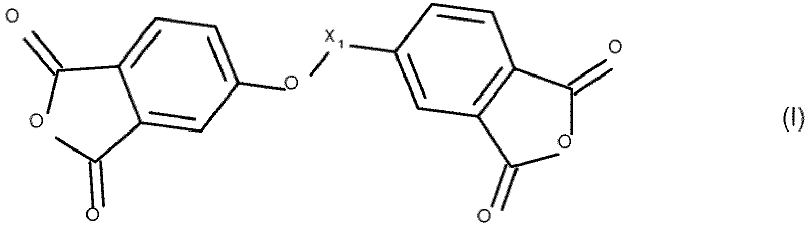 dans laquelle
X₁ représente une liaison ou un radical aliphatique, aromatique ou araliphatique,
avec
(b) au moins un polyéther de la formule structurale générale (II) : 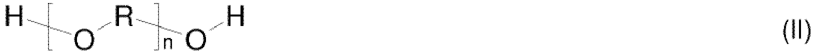 dans laquelle
R représente un radical alkylène en C₃ à C₆, et n est choisi de telle sorte que le polyéther (b) présente un poids moléculaire moyen en nombre de 500 à 5 000 g/mol,
les composants (a) et (b) étant utilisés lors de la réaction en un rapport molaire de 0,7/2,3 à 1,6/1,7, et le produit de réaction résultant présentant un indice d'acidité de 5 à 80 mg de KOH/g.

11. Vernis de base selon la revendication 10, **caractérisé en ce que** le dianhydride d'acide tétracarboxylique (a1) est le 4,4'-oxydiphtalanhydride ou le 4,4'-(4,4'-isopropylidène-diphénoxy)bis(phtalanhydride).

12. Produit de réaction à base d'un polyéther, qui peut être fabriqué par mise en réaction de :
(a1) au moins un dianhydride d'acide tétracarboxylique de la formule structurale générale (I) : 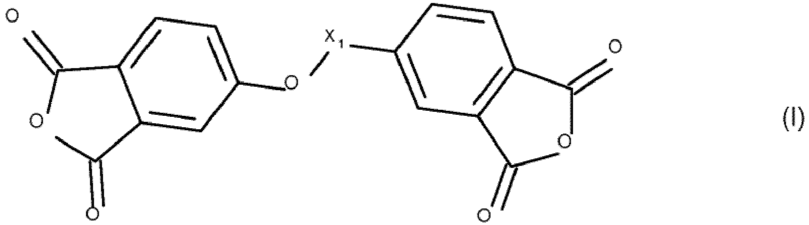 dans laquelle
X₁ représente une liaison ou un radical aliphatique, aromatique ou araliphatique,
avec
(b) au moins un polyéther de la formule structurale générale (II) : 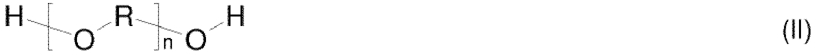 dans laquelle
R représente un radical alkylène en C₃ à C₆, et n est choisi de telle sorte que le polyéther (b) présente un poids moléculaire moyen en nombre de 500 à 5 000 g/mol,
les composants (a) et (b) étant utilisés lors de la réaction en un rapport molaire de 0,7/2,3 à 1,6/1,7, et le produit de réaction résultant présentant un indice d'acidité de 5 à 80 mg de KOH/g.

13. Produit de réaction à base d'un polyéther selon la revendication 12, **caractérisé en ce que** le groupe X₁ selon la formule structurale générale (I) consiste en un radical contenant 1 à 30 atomes de carbone ou 1 à 16 atomes de carbone.

14. Produit de réaction à base d'un polyéther selon la revendication 12, **caractérisé en ce que**
X₁ = une liaison, et correspondant par conséquent au 4,4'-oxydiphtalanhydride,
ou
X₁ = 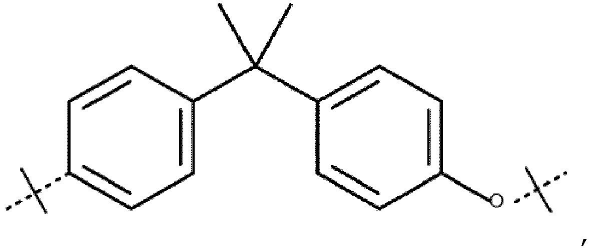 et correspondant par conséquent au 4,4'-(4,4'-isopropylidène-diphénoxy) bis (phtalanhydride).

15. Utilisation d'un vernis de base aqueux pigmenté selon l'une quelconque des revendications 1 à 11 ou utilisation du produit de réaction selon l'une quelconque des revendications 12 à 14 pour améliorer la résistance aux chutes de pierres de vernissages qui sont fabriqués en utilisant le vernis de base.

16. Procédé de fabrication d'un vernissage multicouche, selon lequel
(1) un vernis de base aqueux pigmenté est appliqué sur un substrat,
(2) un film polymère est formé à partir du vernis appliqué à l'étape (1),
(3) un vernis transparent est appliqué sur la couche de vernis de base ainsi obtenue, puis
(4) la couche de vernis de base est durcie conjointement avec la couche de vernis transparent,
**caractérisé en ce qu'**à l'étape (1), un vernis de base aqueux pigmenté selon l'une quelconque des revendications 1 à 11 ou un vernis de base aqueux pigmenté contenant le produit de réaction selon l'une quelconque des revendications 12 à 14 est utilisé.

17. Procédé selon la revendication 16, **caractérisé en ce que** le substrat de l'étape (1) est un substrat métallique revêtu avec une couche de vernis pour électrodéposition durcie, et toutes les couches appliquées sur la couche de vernis pour électrodéposition sont durcies ensemble.

18. Procédé selon la revendication 16, **caractérisé en ce que** le substrat de l'étape (1) consiste en un substrat en métal ou en matière plastique.

19. Vernissage multicouche, pouvant être fabriqué par le procédé selon l'une quelconque des revendications 16 à 18.
